(19) **Europäisches Patentamt / European Patent Office / Office européen des brevets**

(11) **EP 3 684 734 B1**

(12) **FASCICULE DE BREVET EUROPEEN**

(45) Date de publication et mention de la délivrance du brevet:
**04.08.2021 Bulletin 2021/31**

(51) Int Cl.:
*C02F 3/08* (2006.01)   *C02F 3/12* (2006.01)
*C02F 1/44* (2006.01)   *C02F 103/34* (2006.01)

(21) Numéro de dépôt: **19728444.1**

(22) Date de dépôt: **06.06.2019**

(86) Numéro de dépôt international:
**PCT/EP2019/064854**

(87) Numéro de publication internationale:
**WO 2019/234182 (12.12.2019 Gazette 2019/50)**

(54) **PROCÉDÉ ET INSTALLATION DE TRAITEMENT DES EAUX USÉES CONTENANT DES MICROPOLLUANTS D'ORIGINE PHARMACEUTIQUE**

AUFBEREITUNGSVERFAHREN UND SYSTEM VON ABWASSER, DAS MIKROSCHADSTOFFE PHARMAZEUTISCHEN URSPRUNGS ENTHÄLT

METHOD AND SYSTEM FOR TREATING WASTEWATER CONTAINING PHARMACEUTICAL MICROPOLLUTANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **08.06.2018 EP 18176828**

(43) Date de publication de la demande:
**29.07.2020 Bulletin 2020/31**

(73) Titulaires:
• **Cockerill Maintenance & Ingenierie S.A.**
 **4100 Seraing (BE)**
• **Centre Belge d'Etude et de Documentation de l'Eau,**
 **en abrégé CEBEDEAU asbl**
 **4000 Liège (BE)**
• **Luxembourg Institute of Science and Technology (LIST)**
 **4362 Esch-sur-Alzette (LU)**

(72) Inventeurs:
• **NONET, Stéphane**
 **5170 Bois-de-Villers (BE)**
• **MAGIS, Alain**
 **4682 Oupeye (BE)**
• **KOEHLER, Christian**
 **54439 Saarburg (DE)**

(74) Mandataire: **AWA Benelux**
 **Parc d'affaires Zénobe Gramme - Bât. K**
 **Square des Conduites d'Eau 1-2**
 **4020 Liège (BE)**

(56) Documents cités:
**WO-A1-2012/019294   CN-A- 107 098 463**

• **JIANG QI ET AL: "Effect of hydraulic retention time on the performance of a hybrid moving bed biofilm reactor-membrane bioreactor system for micropollutants removal from municipal wastewater", BIORESOURCE TECHNOLOGY, ELSEVIER, AMSTERDAM, NL, vol. 247, 20 septembre 2017 (2017-09-20), pages 1228-1232, XP085298926, ISSN: 0960-8524, DOI: 10.1016/J.BIORTECH.2017.09.114**
• **PAREDES L ET AL: "Understanding the fate of organic micropollutants in sand and granular activated carbon biofiltration systems", SCIENCE OF THE TOTAL ENVIRONMENT, ELSEVIER, AMSTERDAM, NL, vol. 551, 18 février 2016 (2016-02-18), pages 640-648, XP029472175, ISSN: 0048-9697, DOI: 10.1016/J.SCITOTENV.2016.02.008**

• L Paredes ET AL: "Supplementary information Understanding the fate of organic micropollutants in sand and granular activated carbon biofiltration systems", , 18 février 2016 (2016-02-18), XP055606469, Extrait de l'Internet: URL:https://ars.els-cdn.com/content/image/ 1-s2.0-S0048969716302194-mmc1.docx [extrait le 2019-07-17]

**Description**

**Objet de l'invention**

La présente invention se rapporte à un procédé de traitement biologique des eaux usées contenant des micropolluants d'origine pharmaceutique même avec des propriétés physico-chimiques différentes, comme par exemple les eaux usées rejetées par un établissement hospitalier.
L'invention se rapporte également à une installation pour la mise en œuvre du procédé.

**Arrière-plan technologique**

Le rejet de produits pharmaceutiques dans les eaux usées est un problème environnemental récent. Actuellement, des effets négatifs imputables à ce rejet sont déjà observés sur les espèces animales. On peut dès lors supposer que l'être humain pourrait lui aussi être affecté dans un futur proche. Malgré cela, aucune norme de rejet n'a été instaurée à ce jour.
Les bioréacteurs membranaires (BRM ou MBR en anglais) et les procédés d'adsorption sur charbon actif (CA) sont deux technologies qui ont été largement étudiées dans le cadre du traitement des eaux usées. Néanmoins, leur implémentation est relativement nouvelle : il existe encore peu d'applications à taille réelle pour le traitement des eaux usées. La plupart des applications de traitement des eaux usées urbaines sont mises en œuvre en utilisant une boue activée conventionnelle (BAC ou CAS en anglais) couplée à un décanteur.
Bien que la technologie membranaire (BRM ou MBR en anglais) soit une solution compacte qui permette de diminuer la variabilité sur l'élimination des macropolluants, voire de réduire la concentration des micropolluants des eaux traitées (par comparaison à une CAS couplée à un filtre à sable), elle reste plus énergivore et présente des coûts d'exploitation plus importants qu'une CAS. C'est la raison pour laquelle la technologie MBR n'a pas été la solution privilégiée par le passé. Ces dernières années, le développement de nouvelles membranes a cependant permis d'améliorer la fiabilité du système et de diminuer la consommation d'énergie, si bien que la technologie MBR est de plus en plus adoptée.
En ce qui concerne les procédés au charbon actif (CA), ils ne sont généralement pas appliqués dans le traitement des eaux usées. Cependant, il existe depuis peu quelques essais pilotes en Europe basés sur le couplage d'un MBR à un CA. Il s'agit d'installations de recherche et non d'unités à taille réelle.
Plus précisément, le charbon actif (CA) est un produit créé à partir de charbon bitumineux, de lignite, de tourbe, de bois ou d'autres matériaux ; il peut être aussi de synthèse. Il peut être utilisé dans de nombreuses applications impliquant généralement l'adsorption de molécules organiques (adsorption de colorants, purification de solution aqueuse utilisée en électrodéposition, purification de l'air, traitement médical, etc.). Après saturation de sa capacité d'adsorption, le charbon actif peut être régénéré et recyclé via un procédé de séchage, désorption/décomposition et réactivation à la vapeur. Il s'agit d'un procédé coûteux impliquant le transport du charbon et une consommation énergétique importante.
La biofiltration est utilisée dans certaines unités de potabilisation de l'eau pour l'élimination des pesticides notamment, mais ce procédé n'est pas largement utilisé.
Ces dernières années, différentes études indiquent que le charbon actif granulaire, outre ses capacités d'adsorption, peut être utilisé comme support pour la croissance de populations bactériennes. Il semblerait que cette forme de charbon confère une certaine protection aux bactéries. De plus, la concentration en bactéries sur le charbon actif granulaire est souvent 100 à 1000 fois plus élevée que celle se retrouvant sur les filtres à sable pour les raisons suivantes :

- environnement adéquat ;

- bonne capacité d'adsorption (substrats, nutriments, oxygène) ;

- temps de contact élevé entre la biomasse et les composés organiques ;

- réduction de la biodisponibilité de certains composés toxiques ;

- présence de groupes fonctionnels favorisant la colonisation et la fixation des bactéries.

Toutefois, l'utilisation de colonnes à *charbon activé biologiquement* (CAB) reste une technologie mal maîtrisée. En effet, de nombreux points nécessitent d'être explorés tels que :

- optimiser l'élimination des substances organiques par les CABs ;
- améliorer l'élimination des micropolluants ;

- découvrir le(s) mécanisme(s) d'élimination des micropolluants ;
- minimiser le temps de colonisation du charbon ;
- étudier l'impact des rétro-lavages ;
- déterminer si l'inoculation des colonnes est efficace ;
- optimiser les paramètres favorables au maintien de la biomasse.

Sur base des connaissances actuelles, l'activité dépolluante du charbon actif fait intervenir trois phases : une première période correspondant à une simple adsorption, une deuxième période correspondant à une adsorption et à une biodégradation et une troisième période correspondant à une biodégradation. Une meilleure maîtrise de la technologie CAB, permettant son développement commercial, constituerait donc une innovation scientifique et technique.

*Le bioréacteur à membrane* (MBR) quant à lui est une technologie permettant une dégradation biologique des polluants via l'emploi de boue activée. La membrane permet de maintenir une concentration élevée de matières en suspension (la fraction des bactéries sous forme de flocs) dans le réacteur tout en permettant l'obtention d'un effluent clarifié.

Une évolution récente de la technologie des réacteurs à membrane est le « Moving Bed Membrane Bioreactor (MB-MBR)» par introduction d'un lit mobile ou fluidisé. Ce type de réacteur hybride, qui combine la technologie de filtration membranaire et la présence d'une biomasse hybride, à la fois sous la forme de flocs en suspension et de biofilms attachés sur un support, est prometteur pour l'épuration des eaux chargées, mais pratiquement inexploré pour le traitement des produits pharmaceutiques (PPs) - cf. état de l'art.

Comparativement aux réacteurs membranaires à biofilms (MF-MBR), les hybrides MB-MBRs (ou IFAS-MBR) présentent, entre autres, l'avantage d'accepter de plus grandes charges de matières en suspension (voir §[0042]).

Une combinaison efficiente des technologies détaillées *supra* pourrait conduire à:

- une amélioration de l'élimination de la DCO (Demande Chimique en Oxygène), incluant les PPs ;

- une réduction du colmatage des CABs grâce à la présence du MBR ;

- une durée de vie nettement accrue des CABs ;

- la mise en place d'une barrière physique efficace limitant une dissémination de bactéries multi-résistantes aux antibiotiques qui se retrouvent potentiellement dans les effluents hospitaliers ;

- l'instauration de trois types de biomasse et donc une diversité microbienne accrue qui permet d'abattre un plus grand nombre de molécules :

  ∘ sous forme de flocs dans le MB-MBR

  ∘ sous forme de biofilms développés sur les supports du même compartiment ;

  ∘ sous forme de biofilms développés sur le CAB.

## Etat de la technique

Les procédés actuels permettant l'épuration des produits pharmaceutiques (PPs) dans les eaux usées comprennent l'adsorption sur particules en suspension, la volatilisation dans l'air, la photolyse et la transformation biologique.

Plus récemment, des traitements avancés ont également été développés : l'ozonation, les procédés d'oxydation avancée (AOP) tels que le traitement $O_3/H_2O_2$, $UV/H_2O_2$ ou $Fe^{2+}/H_2O_2$ permettant de former des radicaux hydroxyles, les procédés de filtration membranaire (nanofiltration et osmose inverse) et la filtration sur charbon actif (CA).

Si ces procédés ont été décrits et investigués à l'échelle du laboratoire pour le traitement des PPs, il n'en existe que peu d'applications industrielles spécifiques au traitement décentralisé (à savoir hors STEP urbaine) des eaux riches en PPs. On présente ci-après les avantages du bioréacteur à membrane à lit mobile (Moving Bed Membrane Bioreactor, MB-MBR), ainsi que des procédés à charbons actifs par rapport aux autres technologies présentes dans l'état de l'art. Les références citées sont reprises dans la bibliographie.

## Bioréacteur à membrane

Le bioréacteur à membrane (MBR) est une technologie qui combine séparation par membrane et dégradation biologique par boues activées. Elle est largement utilisée dans le traitement des eaux usées urbaines et industrielles.

L'utilisation de ce type de réacteur pour le traitement des eaux usées chargées en PPs offre trois grands avantages conceptuels par rapport aux procédés à boues activées conventionnels (BAC ou CAS): une capacité à travailler avec un âge des boues élevé (>25 jours), une concentration supérieure en biomasse dans le réacteur ainsi qu'une rétention complète des particules solides. Ces avantages ont une répercussion directe sur l'épuration des PPs : la membrane retient les particules solides sur lesquelles les PPs sont adsorbés (Clara *et al.,* 2005), une partie des PPs s'adsorbe directement sur la membrane (Chang *et al.,* 2003), et l'âge des boues élevé facilite la transformation biologique des PPs au sein du réacteur.

L'âge des boues est un paramètre clef des processus de transformation biologique. Il est directement relié à la faculté d'adaptation biochimique de la boue activée. Ainsi, l'âge des boues élevé des MBR favorise la diversification des communautés microbiennes aux caractéristiques physiologiques diverses, l'adaptation de ces communautés à la dégradation des micropolluants présents dans le réacteur et le développement de bactéries à faible taux de croissance (Aubenneau *et al.,* 2011). Parmi ces bactéries à faible taux de croissance, les bactéries nitrifiantes semblent jouer un rôle important dans la dégradation des micropolluants. En effet, Roh *et al.* (2009) ont observé une biodégradation plus élevée pour certains micropolluants lorsque la biomasse est riche en bactéries nitrifiantes.

La concentration élevée en biomasse diminue le ratio substrat/microorganisme au sein du MBR, entraînant une minéralisation élevée du substrat. Cette concentration élevée de boue activée induit une augmentation des échanges d'information génétique au sein des MBR, amplifiant ainsi la biodiversité dans le réacteur (Ciçek *et al.,* 2001).

Les transferts de masse sont plus importants dans les MBR que pour les BAC. En effet, les flocs bactériens des MBR sont en moyenne plus petits que ceux des BAC et la surface spécifique de ces flocs par unité de volume de réacteur est plus grande, favorisant ainsi la dégradation biologique des polluants. Selon Radjenovic *et al.* (2007), ce phénomène de transfert de masse est à l'origine des meilleures performances d'épuration de PPs observées dans un MBR par rapport à un BAC. Ces auteurs ont également observé une meilleure uniformité des concentrations en diclofénac, kétoprofène, ranitidine, gemfibrozile, bezafibrate, paravastatine et ofloxacine à la sortie du MBR en comparaison au BAC.

En traitant les données existantes sur la comparaison BAC/MBR pour le traitement de micropolluants, Weiss et Reemtsma (2008) en ont conclu que le MBR a une capacité d'épuration supérieure au BAC pour les polluants au potentiel de biodégradabilité moyen. Pour les substances facilement biodégradables, ces auteurs positionnent MBR et BAC sur le même pied d'égalité. Bien que le MBR n'obtienne pas toujours de performances supérieures au BAC, De Wever *et al.* (2007) le préfèrent pour ses performances plus constantes, et sa meilleure gestion des effluents à concentrations fluctuantes.

Ces différents avantages font des réacteurs membranaires une technologie plus adaptée que les BACs pour le traitement des produits pharmaceutiques.

Notons finalement que, pour une application industrielle, un avantage important des MBRs est la compacité du système, engendrée par la forte concentration en biomasse du réacteur. Cette compacité est néanmoins influencée par l'âge des boues au sein du MBR. En effet, un âge des boues trop élevé peut entraîner une diminution de la proportion de biomasse active dans le MBR.

Pour pallier cet effet, et permettre au système de rester compact tout en étant performant, on peut découpler l'âge des boues au sein du réacteur en favorisant le développement de deux niches bactériennes au sein du MBR : l'une comprenant la biomasse en suspension, à faible âge des boues et l'autre comprenant une biomasse fixée sur supports, ayant un âge de boues élevé. L'intérêt de la présence de ce type de procédé à biofilm est décrit dans la section suivante.

Procédé à biofilms

Les procédés à boues activées sont prédominants dans le secteur de l'épuration des eaux. Une manière d'intensifier ces procédés est d'utiliser la propension naturelle qu'ont les bactéries à former des biofilms, lorsqu'elles sont en présence de supports adaptés. Les systèmes à biofilms offrent plusieurs avantages opérationnels par rapport aux systèmes à boues activées : faible emprise spatiale, possibilité de fonctionnement à faible temps de rétention hydraulique, flexibilité opérationnelle, forte concentration de biomasse par unité de volume du réacteur et faible croissance microbienne, entraînant une faible production de boues (Andersson, 2009). On classe généralement ce type de systèmes selon le type de support utilisé : fixe ou fluidisé.

Bien que les réacteurs à biofilms aient été utilisés avec succès pour l'épuration des polluants traditionnels (pollution organique et nutriments, Chu et Wang, 2011 ; Ngo *et al.,* 2008), les exemples d'application de tels réacteurs pour l'épuration des micropolluants sont nettement plus rares.

Certaines études ont montré que les biofilms pouvaient engendrer de meilleurs rendements épuratoires que les procédés à biomasse en suspension, pour certains micropolluants (Rodriguez-Hernandez *et al,* 2014; Zupanc *et al,* 2013; Falas *et al,* 2012; 2013). Si ces études ne décrivent pas les mécanismes sous-jacents permettant d'expliquer ces différences, il est probable que l'augmentation de la diversité microbienne du réacteur en soit une cause importante.

Cette richesse, favorisée par un découplage de l'âge des boues en suspension par rapport à celui de la biomasse fixée, permet d'obtenir une meilleure adaptation de la communauté bactérienne au substrat et de favoriser le développement de microorganismes à croissance lente au sein du réacteur.

Les observations faites par Falas *et al.* (2013) pour la dégradation de certains PPs entre un réacteur à biomasse fixée et en suspension sont résumées dans le Tableau 1

*Tableau 1 : Constantes de dégradation ($K_{bio}$) de certains micropolluants pour une biomasse en suspension et une biomasse fixée.*

| Produits pharmaceutiques | | $K_{bio}$ (l/g biomasse. jour) Biomasse | |
|---|---|---|---|
| | | En suspension | Fixée |
| **Antibiotiques** | *N-acetylsulfamethoxazole* | 1,1-1,4 | 0,7-1,6 |
| | *Clarithromycine* | 0,18-0,29 | ≤0,2 |
| **Anti-inflammatoire** | *Diclofénac* | ≤0,1 | 1,3-1,7 |
| **Antiépileptique** | *Carbamazépine* | ≤0,1 | ≤0,1 |
| **Béta-bloquant** | *Aténolol* | 0,67-0,9 | 0,53-0,67 |
| **Agents hypolipémiants** | *Bezafibrate* | 2,3-2,9 | 5,2-6,0 |

Dans ce tableau, les constantes de dégradation englobent les mécanismes de sorption, désorption et biodégradation, et sont données sous la forme de la constante de dégradation $K_{bio}$. Selon le $K_{bio}$ on peut identifier trois groupes de composés : non dégradés significativement (<20%) pour les composés au $K_{bio}$ <0.1 l/(g biomasse . jour), composés dégradés à plus de 90% pour les composés au $K_{bio}$ >10 l/(g biomasse . jour) et des composés plus ou moins dégradés pour les valeurs intermédiaires (Joss *et al.,* 2006). On a observé que le procédé à biofilm favorise la dégradation de la thriméthroprime, du kétoprofène, du diclofénac, du lévétiracétam, du valsartan et du benzofibrate par rapport au procédé à biomasse en suspension. Ces meilleurs rendements pourraient être expliqués par les différentes conditions d'oxydoréduction existant au sein des biofilms (oxique/anoxique). Un réglage délicat de l'épaisseur des biofilms agit sur le gradient redox en son sein, et donc sur les microorganismes qui s'y trouvent.

L'étude de Luo *et al.* (2014) traite de l'utilisation d'un réacteur à biofilm ayant un support bactérien en éponge, avec des taux d'abattement rapportés variant entre 25,9 et 96,8%, selon les micropolluants considérés. Dans cette étude, la biodégradation a été identifiée comme le mécanisme principal de dégradation des micropolluants. L'adsorption sur la boue joue également un rôle non négligeable, surtout pour la carbamazépine, le kétoprofen et le pentachlorophénol.

Les procédés à biofilm trouvent donc a priori pleinement leur justification dans le traitement des micropolluants.

Moving bed Membrane bioreactor (MB-MBR)

Le « Moving Bed Membrane Bioreactor (MB-MBR)» est une évolution récente de la technologie des réacteurs à membranes. Ce type de réacteur, qui combine les avantages des biofilms et celle de la filtration membranaire (voir ci-dessus), est prometteur pour l'épuration des eaux chargées en PPs *in situ* car il rassemble les avantages des deux technologies au sein d'un même procédé. Des recherches actuelles se focalisent principalement sur l'impact du lit mobile sur la réduction du colmatage des membranes.

Des applications industrielles des réacteurs de type MB-MBR n'ont, à la connaissance des inventeurs, pas encore été utilisées pour le traitement d'eaux usées concentrées en PPs bien que le potentiel de cette technologie pour l'élimination de composés pharmaceutiques soit important.

L'avantage du MB-MBR est d'être une technologie très compacte mais son désavantage est un coût d'investissement élevé.

N. Vieno *et al.* ont étudié l'élimination du diclofénac dans une usine de traitement des eaux usées municipales. Les bioréacteurs à membranes (MBR) et les bioréacteurs mixtes (MB-MBR) permettent une élimination supérieure du diclofénac par rapport aux boues activées conventionnelles.

T. de la Torre et al. ont étudié l'élimination de 17 composés pharmaceutiques et de 22 polluants de trace organique dans une installation pilote de traitement d'eaux usées urbaines. Les bioréacteurs à membranes à biomasse en suspension (MBR) ou mixte (MB-MRB), ainsi qu'un bioréacteur à membranes à biofilm intégré (IFAS-MBR) ont été comparés. Une osmose inverse a été également utilisée après le pilote pour améliorer les taux d'élimination. L'élimination des hormones a été de 100% dans le réacteur IFAS-MBR, ce qui a été attribué à la présence de biofilm. Après osmose inverse, on atteint des taux d'élimination de 88% en moyenne.

Jiang Qi et *al.* ont évalué l'élimination des micropolluants et le comportement d'encrassement de la membrane d'un système hybride de réacteur à biofilm à lit mobile et bioréacteur à membrane (MBBR-MBR).

Couplage MBR - Charbon actif

Bien que le MBR soit considéré comme un procédé efficace pour le traitement de certains PPs, il ne permet malheureusement pas de dégrader/adsorber l'entièreté des micropolluants présents dans les eaux usées. L'efficacité limitée des MBR pour la dégradation de certains micropolluants nécessite le couplage du procédé aérobie avec un post-traitement, comme, par exemple, un charbon actif (CA). Un tel couplage est théoriquement intéressant. En effet, l'effluent en sortie du MBR est déjà partiellement épuré, et il contient beaucoup moins de composés organiques volumineux qui pourraient entrer en compétition avec les PPs pour les sites d'adsorption du charbon actif.

Les études de Nguyen *et al.* (2012, 2013) traitent de l'utilisation conjointe d'un MBR couplé à une unité de charbon actif granulaire en post-traitement pour la dégradation de PPs. Le problème de la régénération du charbon actif autrement que par remplacement n'est pas résolu (le remplacement de l'ensemble du CA est nécessaire tous les 1000 BV pour maintenir un taux d'épuration du fénoprop, un herbicide, au-dessus de 20%).

E. Schneider *et al.* ont évalué la performance d'un réacteur MB-MBR pour le traitement d'eaux usées de raffinerie de pétrole et la possibilité de réutiliser les effluents de MB-MBR, après ozonation, en série avec une colonne de CAB.

Paredes et *al.* ont étudié un procédé de post-traitement des effluents de bioréacteurs pour éliminer des micropolluants d'origine pharmaceutique dans une cuve de biofiltration.

Le document EP 2 960 214 concerne un procédé d'élimination de produits pharmaceutiques présents dans des eaux usées, au moyen de l'utilisation de charbon actif en poudre (CAP) dans un réacteur biologique séquentiel couplé à une enceinte à membrane de filtration. Ce réacteur comprend une première unité de réaction qui fonctionne de manière séquentielle et dans laquelle on ajoute le CAP. L'effluent produit issu de la première unité passe vers une enceinte annexe qui dispose d'une membrane d'ultrafiltration dont la dimension des pores est située entre 0,04 et 0,4 $\mu$m, avec une aération continue, et dont le perméat constitue l'effluent du procédé. Le CAP est ajouté afin de maximiser l'élimination de contaminants pharmaceutiques, notamment ceux qui sont réfractaires aux traitements biologiques. Ce procédé permet non seulement de réduire la matière organique (>95%) et les nutriments (>75%), mais il permet également d'obtenir des rendements élevés (>90%) d'élimination des produits pharmaceutiques présents au niveau de traces (< 100 $\mu$g/L).

Dans les documents WO 2012/119266 et WO 2014/036732, on réduit la demande chimique en oxygène (DCO ou COD en anglais) réfractaire dans un système de traitement d'eau. La méthode comprend le prétraitement du liquide dans une unité de prétraitement pour réduire la quantité de bactéries ou de microorganismes indigènes afin d'éviter qu'ils ne nuisent aux microorganismes sélectionnés et introduits de l'extérieur. Le liquide est ensuite introduit dans un réacteur qui comprend un lit filtrant constitué d'un matériau support. Des microorganismes spéciaux sont sélectionnés et utilisés pour coloniser le matériau support afin d'éliminer la DCO réfractaire. On cultive un biofilm sur la surface du matériau support afin d'immobiliser les microorganismes sélectionnés dans le réacteur. La méthode comprend de plus la percolation du liquide provenant de l'unité de prétraitement au travers du lit filtrant colonisé par les microbes sélectionnés afin de dégrader au moins partiellement la DCO réfractaire dans des conditions aérobies. Dans un mode de réalisation, le matériau support est formé de charbon actif en grains (CAG) et les microorganismes sélectionnés contiennent au moins une espèce microbienne sélectionnée dans les genres suivants : Bacillus, Comamonas, Arthrobacter, Micrococcus, Pseudomonas, Pediococcus, Achromobacter, Flavobacterium, Mycobacterium, Rhodanobacter, Stenotrophomonas ainsi que parmi les levures.

Le document WO 2017/067882 divulgue un dispositif conçu pour le traitement des eaux usées comprenant au moins une sorte de micropolluants. Ledit dispositif comprend une colonne et un système de lavage à contre-courant en communication fluidique avec ladite colonne. La colonne présente une zone qui comprend du charbon biologiquement activé qui est en aval de l'entrée de la colonne, ladite zone étant divisée en sous-zones A, B et C. La colonne comprend en outre un espace de lavage à contre-courant, qui se trouve en aval de ladite zone comprenant du charbon biologiquement activé. Ledit dispositif est remarquable en ce que le charbon biologiquement activé de la sous-zone A comprend des micro-organismes sous-alimentés, le charbon biologiquement activé de la sous-zone B comprend des micro-organismes alimentés par un premier système d'alimentation, et le charbon biologiquement activé de la sous-zone C comprend des micro-organismes alimentés par un second système d'alimentation.

L'étude de l'état de l'art montre qu'il existe certaines pistes inexplorées qui permetraient d'améliorer le traitement biologique des eaux chargées en PPs. Certaines de ces pistes sont par exemple que :

- normalement, l'efficacité de la dégradation est augmentée pour des âges de boues élevés (supérieur à 25 jours) ;
- la technologie MBR est plus efficace que le traitement conventionnel a boue activée (BAC) ;
- les procédés à biomasse fixée peuvent s'avérer plus efficaces que ceux à biomasse en suspension ;
- les bactéries à faible taux de croissance, dont les bactéries nitrifiantes, jouent un rôle clé dans la biodégradation des PPs.

Sur base de ces pistes, il est probable que la dégradation des PPs sera améliorée par :

a. l'augmentation de l'âge des boues dans le MBR ;
b. la présence d'un environnement qui contient beaucoup moins de DCO facilement biodégradable, lequel environnement permettra de donner un avantage compétitif à des bactéries spécialisées ;
c. la présence d'un environnement ou les bactéries spécialisées pourront se développer (supports bactériens).

Les bactéries spécialisées sont définies comme des bactéries judicieusement sélectionnées, cultivées et multipliées pour obtenir et optimiser une colonisation du charbon actif, une élimination des micropolluants adsorbés et une régénération du charbon actif.

### Buts de l'invention

La présente invention vise à fournir une solution au problème de la présence de micropolluants d'origine pharmaceutique dans les eaux usées.

L'invention vise en particulier à maintenir les coûts opérationnels d'épuration sous contrôle, en particulier ceux liés à la consommation électrique des installations.

L'invention vise aussi des améliorations par rapport à l'art antérieur telles qu'un traitement 100% biologique, l'absence de colmatage lié à l'utilisation de membranes d'osmose inverse ou encore l'absence de consommation (pertes) de charbon actif en grains (CAG ou GAC en anglais) avec possibilité de réactivation sans recyclage coûteux.

En particulier, l'invention vise à mieux maîtriser et à optimiser l'utilisation industrielle de colonnes à CAB.

L'invention vise encore à utiliser des supports bactériens qui n'endommagent pas les membranes des réacteurs.

L'invention a enfin pour but secondaire de créer une installation d'épuration qui soit compacte et qui présente un aspect visuel acceptable.

### Principaux éléments caractéristiques de l'invention

Un premier aspect de la présente invention se rapporte à un procédé complètement biologique pour éliminer un premier groupe de micropolluants d'origine pharmaceutique et un second groupe de micropolluants d'origine pharmaceutique dans des eaux usées, le procédé comprenant les étapes de :

- fournir une première cuve tampon en amont du bioréacteur ;

- fournir un bioréacteur à membranes et à lit mobile (MB-MBR) pour développer une croissance de biomasse à la fois sur support fixe et en suspension sous forme de flocs, et sur des supports mobiles, ledit bioréacteur étant configuré pour obtenir un effluent avec une concentration DCO de matière organique inférieure à 50 mg l$^{-1}$ et une concentration en azote total inférieure à 15 mg l$^{-1}$ ;

- fournir une cuve de biofiltration, distincte de la cuve du bioréacteur, comprenant une ou plusieurs colonnes à charbon activé biologiquement (CAB) contenant du charbon actif ;

- alimenter la première cuve tampon en amont du bioréacteur avec des eaux usées comprenant des micropolluants d'origine pharmaceutique ;

- prétraiter lesdites eaux usées comprenant des micropolluants d'origine pharmaceutique par passage dans un tamis à mailles fines, de manière à retenir les particules ayant un diamètre supérieur à 1 mm ;

- dans un premier traitement, introduire les eaux usées, une fois tamisées, dans le bioréacteur peuplé et éventuellement ensemencé d'un premier consortium microbien se trouvant et/ou se développant sur les parties fixes et en suspension sous forme de flocs, et sur les supports mobiles, pendant un premier temps de rétention ;

- introduire ou inoculer un second consortium microbien dans la cuve de biofiltration ;

- dans un second traitement, introduire les eaux usées traitées par le bioréacteur dans la cuve de biofiltration et laisser adsorber les résidus de micropolluants d'origine pharmaceutique sur le charbon actif ;

- laisser coloniser le charbon actif ayant préalablement adsorbé les résidus de micropolluants d'origine pharmaceutique par le second consortium microbien sous forme de biofilms, laisser biodégrader lesdits résidus par le second consortium microbien et laisser biorégénérer le charbon actif, pendant un second temps de rétention ;

- rejeter dans l'environnement les eaux usées traitées ;

le temps de rétention hydraulique total, constitué de la somme du premier temps de rétention et du second temps de rétention, étant déterminé pour obtenir un rendement épuratoire (R) moyen des micropolluants d'origine pharmaceutique du premier groupe dans les eaux usées traitées supérieur à 80%, de préférence supérieur à 95%, et un rendement épuratoire moyen des micropolluants d'origine pharmaceutique du second groupe supérieur à 40-50%, en référence à leur teneur ($C_0$) dans les eaux usées de départ ;
le procédé comportant les étapes complémentaires suivantes :

- fournir une seconde cuve tampon insérée entre le bioréacteur à membranes et à lit mobile (MB-MBR) et la cuve de biofiltration ;

- en fonctionnement normal, alimenter la seconde cuve tampon (12) avec l'effluent du premier traitement et alimenter le second traitement à partir de la seconde cuve tampon ;

- effectuer un contre-lavage séparé des membranes du bioréacteur (11) et du charbon activé biologiquement.

Selon des modalités préférées de l'invention, le procédé comprend au moins une des caractéristiques suivantes, ou une combinaison appropriée de celles-ci :

- la cuve du bioréacteur à membranes et à lit mobile hybride (MB-MBR) est séparée de la cuve de biofiltration par une membrane d'ultrafiltration, afin de séparer le premier et le second consortia microbiens, en particulier de développer sans contamination des bactéries spécialisées sur le charbon actif ;

- le temps de contact hydraulique ou EBCT en colonne à charbon activé biologiquement CAB est supérieur à 10 minutes ;

- le temps de contact hydraulique est de préférence compris entre 10 et 20 minutes, et de préférence encore supérieur à 20 minutes, avec une vitesse de filtration HLR comprise entre 2 et au moins 5 mh$^{-1}$ ;

- les micropolluants d'origine pharmaceutique du premier groupe considérés dans le procédé comprennent au moins un micropolluant sélectionné dans le groupe constitué de l'amisulpride, la carbamazépine, l'hydrochlorothiazide et le métoprolol ;

- les micropolluants d'origine pharmaceutique du second groupe considérés dans le procédé comprennent au moins un micropolluant sélectionné dans le groupe constitué de la clarithromycine, du cyclophosphamide et du diclofénac ;

- on ensemence le bioréacteur à membranes par un premier consortium de microorganismes externes, pour coloniser des parties fixes et les supports mobiles avec lesdits microorganismes et mettre en culture un biofilm sur ces parties fixes et ces supports mobiles afin d'immobiliser lesdits microorganismes ;

- les microorganismes du second consortium proviennent de l'effluent du bioréacteur et/ou sont au moins en partie différents de ceux du premier consortium, suite à une auto-sélection au cours du temps ;

- le charbon activé biologiquement est mis en œuvre sous forme de charbon actif en poudre, en grains ou en micrograins ;

- une étape supplémentaire de purification de l'air issu de la filière de traitement des eaux usées est mise en oeuvre, notamment en vue d'éliminer les odeurs ; au moyen d'ozone, de rayonnement ultraviolet ou de charbon actif.

Un deuxième aspect de l'invention se rapporte à une installation pour la mise en œuvre du procédé décrit précédemment, caractérisée en ce qu'elle comprend :

- une première cuve tampon pour une alimentation stable en eaux usées contenant des micropolluants d'origine pharmaceutique ;

- une unité de pompage ;

- une étape de prétraitement incluant au moins un tamis à mailles fines pour la rétention des particules ayant un diamètre supérieur à 1 mm ;

- un bioréacteur à membranes et à lit mobile hybride (MB-MBR) pour développer une croissance de biomasse à la fois sur support fixe et en suspension sous forme de flocs, et sur des supports mobiles ;

- au moins une cuve de biofiltration sur charbon activé biologiquement distincte de la cuve du bioréacteur, séparée de celui-ci par une membrane d'ultrafiltration et située en aval de celui-ci, comprenant une ou plusieurs colonnes à charbon activé biologiquement (BAC) ;

- une cuve tampon insérée entre le bioréacteur à membrane et la cuve de biofiltration, pour le contre-lavage séparé des membranes du bioréacteur MB-MBR et du charbon activé biologiquement ;

- des unités de stockage et dosage de produits chimiques ;

- un système de traitement de l'air et des odeurs.

## Brève description des figures

La Figure 1 représente schématiquement les séquences de traitement pour une installation de traitement présentant un couplage MB-MBR/CAB.

La Figure 2 donne des valeurs typiques pour un certain nombre de paramètres habituels en analyse des eaux usées (DCO, température, conductivité, pH, etc.) ainsi que les concentrations de différents types de macropolluants détergents, organiques extractibles par solvant, etc.) dans un exemple d'eaux usées rejetées par un établissement hospitalier.

La Figure 3 montre les rendements d'élimination des macropolluants pour les deux stratégies d'aération investiguées (dénitrification par SNDN à gauche, n=3 et ANDN, n=5 à droite).

La Figure 4 montre les rendements correspondants d'élimination dans le cas de micropolluants.

La Figure 5 montre le rendement épuratoire de la partie MB-MBR du procédé selon l'invention pour l'ensemble des molécules indicatrices quantifiables.

La Figure 6 montre le profil de la courbe de consommation cumulée en oxygène dissous (DO) sur les cinq colonnes de CA selon une forme d'exécution préférée de l'invention.

La Figure 7 montre l'intégration des données présentées à la Figure 6.

La Figure 8 montre les rendements épuratoires de 12 des 13 molécules indicatrices sur les cinq colonnes de CA selon une forme d'exécution préférée de l'invention.

La Figure 9 montre le rendement épuratoire global pour l'élimination des macropolluants dans le MB-MBR-CAB.

La Figure 10 donne les rendements épuratoires individuels du procédé global pour 12 des 13 molécules indicatrices.

## Description détaillée de l'invention

Les études de Nguyen *et al.* (2012, 2013) ont montré de bonnes performances d'épuration du MBR pour les contaminants hydrophobes, ainsi qu'une certaine capacité de dégradation des micropolluants hydrophiles et persistants (carbamazépine, diclofénac et fénoprop) sur un charbon actif granulaire, justifiant la complémentarité des deux unités.

Cependant, elles mettent aussi en avant un problème de dégradation de la capacité d'adsorption dans le temps du charbon actif pour certains PPs hydrophiles, ce qui questionne sur la méthode de régénération du charbon actif.

Les inventeurs proposent la résolution de ce problème par l'utilisation d'un charbon activé biologiquement, car la régénération du charbon actif peut être avantageusement stimulée par les bactéries présentes.

Dans le cadre du traitement des micropolluants, le développement de nouvelles configurations hybrides de MB-MBR/CAB spécialement conçues pour garantir une élimination accrue de produits pharmaceutiques (PPs) constitue un enjeu à la fois scientifique et environnemental. Le succès de cette technologie repose sur (1) une parfaite maîtrise des transferts biotiques (biosorption) ou abiotiques (volatisation, adsorption sur un support) des micropolluants au sein de l'unité de traitement, (2) le développement de consortiums microbiens épurateurs spécifiques, (3) une augmentation de la biodisponibilité des PPs et donc de leur biodégradation, (4) une diminution du colmatage des membranes et (5) une réduction de l'impact environnemental et des coûts énergétiques.

La démarche scientifique associée au projet peut être résumée comme suit :

- les effluents liquides hospitaliers ont un effet sur la vie aquatique ;

- mais l'installation d'une station d'épuration au sein du centre hospitalier est actuellement trop coûteuse ;

- les traitements biologiques conventionnels ne sont pas appropriés pour éliminer les produits pharmaceutiques, bien que le traitement biologique soit l'étape la plus efficace ;

- certains traitements avancés sont adéquats (UV, $O_3$, CA) ; néanmoins, les traitements avancés actuels sont gourmands en énergie ;

- l'UE a inscrit plusieurs produits pharmaceutiques dans une liste de substances prioritaires ; cette liste est amenée à s'étendre ;

- ce projet investigue essentiellement les limites du traitement biologique en scindant conceptuellement le procédé en deux étapes permettant le développement et l'optimisation de différents consortia microbiens spécialisés (flocs, biofilm, CAB).

## Description de formes d'exécution préférées de l'invention

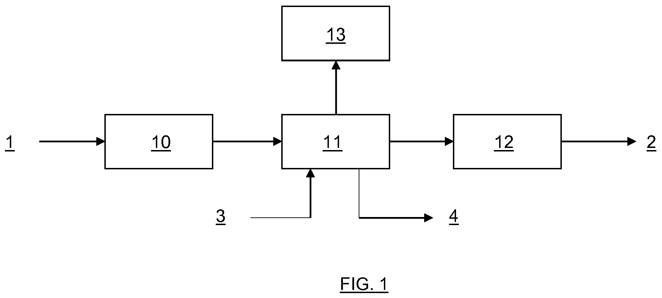

La ligne de traitement pour le couplage MB-MBR/CAB selon une forme d'exécution préférée de l'invention et représentée schématiquement à la Figure 1 comprend :

- une cuve tampon 10 dans laquelle arrivent les eaux usées 1 chargées de PPs ;
- une unité de pompage (non représentée) ;
- une étape de prétraitement incluant au moins un tamis à mailles fines (non représentée) ;
- un réacteur MB-MBR 11 (Moving Bed Membrane Bio Reactor) alimenté par les eaux usées venant de la cuve 10 et par de l'air 3 et avec en sortie le rejet de boues 4 et une unité de traitement de l'air 13 ;
- au moins une cuve de biofiltration 12 séparée du réacteur MB-MBR 11 ;
- plusieurs unités de stockage et dosage de produits chimiques (non représentées) ;
- un système de suppression des odeurs 13 ;
- une cuve de stockage des purges de la cuve 11 (non représentée)
- le rejet des eaux traitées 2 à l'environnement.

La cuve tampon 10 assure une alimentation stable du procédé de traitement biologique. Le tamisage fin permet l'élimination des particules de taille > 1 mm en vue notamment d'éviter la sédimentation dans les cuves biologiques (et donc un colmatage de conduites, pompes, etc.). Les deux cuves de traitement biologique, de préférence séparées par une membrane d'ultrafiltration pour éviter la contamination réciproque, vont permettre le développement de consortia microbiens différents. La première cuve de traitement 11 (MB-MBR) va utiliser des procédés à croissance de biomasse à la fois en suspension et fixe en vue d'augmenter la concentration en biomasse et le rendement de l'élimination de DOC et N. Les colonnes de biofiltration 12 (ou à charbon activé biologiquement) sont destinées à l'élimination des produits pharmaceutiques restants après le passage dans la cuve MB-MBR 11 grâce aux bactéries du second consortium en biofilms. Les résidus de médicaments vont être adsorbés sur le charbon actif ; ensuite les colonies bactériennes vont se développer sur les sites proximaux. Selon l'invention, une auto-sélection des bactéries spécialisées dans le CAB est possible grâce à (1) l'abattement de la DCO facilement biodégradable dans le MB-MBR, qui va priver les bactéries de nutriments et les forcer à coloniser le CAB et (2) une membrane d'ultrafiltration séparant les consortia bactériens des deux cuves.

Selon une modalité d'exécution alternative, les deux cuves de traitement biologique ne seront pas séparées par une membrane d'ultrafiltration de sorte que, lors d'un contre-lavage du charbon actif, des eaux de lavage chargées en bactéries du deuxième consortium (spécialisées dans le CAB) puissent être renvoyées dans le MB-MBR et enrichir le premier consortium bactérien.

Un système d'élimination des odeurs sera avantageusement déterminé ou optimisé en considérant :

- les problèmes environnementaux et de santé publique ;
- les exigences dues à un degré élevé de compacité de l'installation.

*Etude, conception et validation d'un système de traitement biologique*

Trois campagnes d'échantillonnage ont été menées sur des eaux usées rejetées par un hôpital, afin d'optimaliser, d'une part, le système de bioréacteur à membrane à culture mixte MB-MBR et, d'autre part, valider le mécanisme épuratoire des colonnes à charbon activé biologiquement CAB.

Les effluents hospitaliers ont été caractérisés. La proportion de micropolluants par rapport à la DCO est tout à fait minime. La concentration en résidus pharmaceutiques est de l'ordre de quelques microgrammes par litre ($\mu$g/l) alors que la DCO titre au moins plusieurs centaines de milligrammes par litre (mg/l).

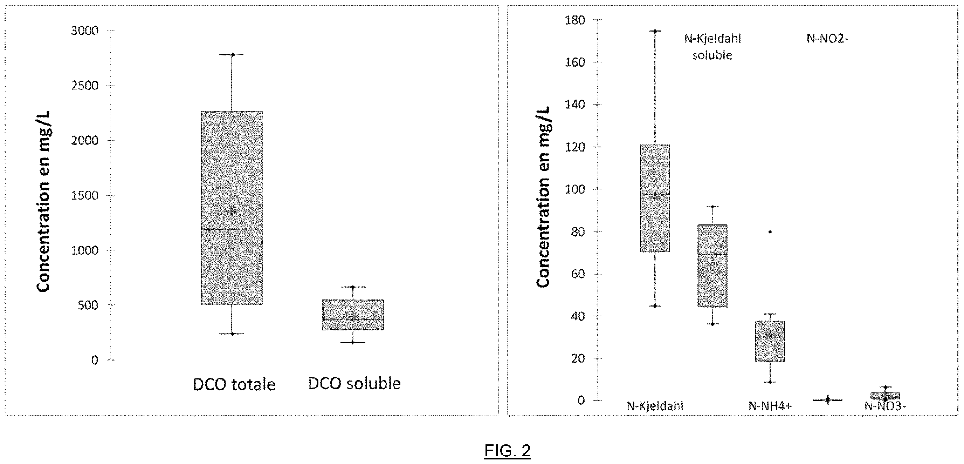

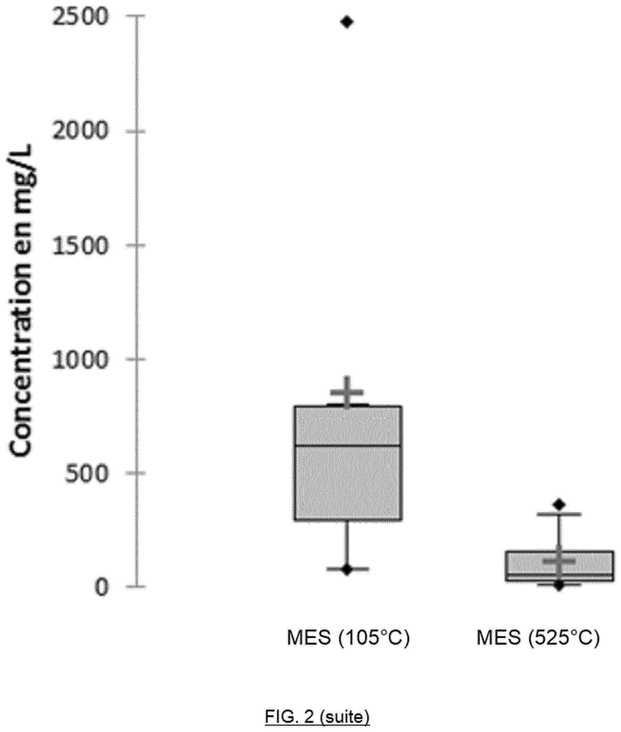

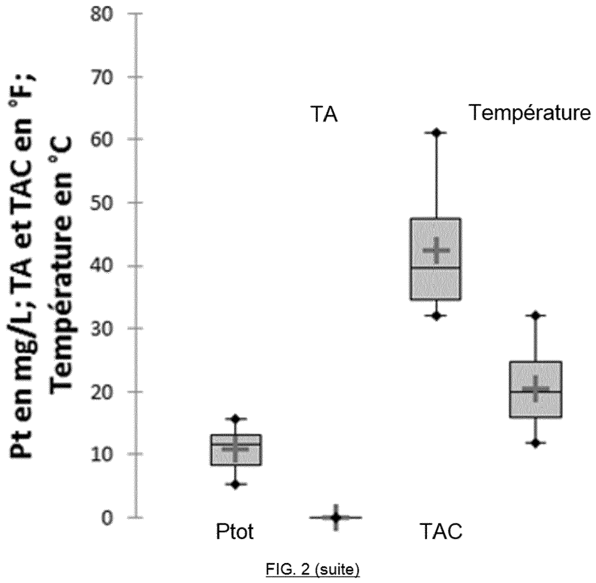

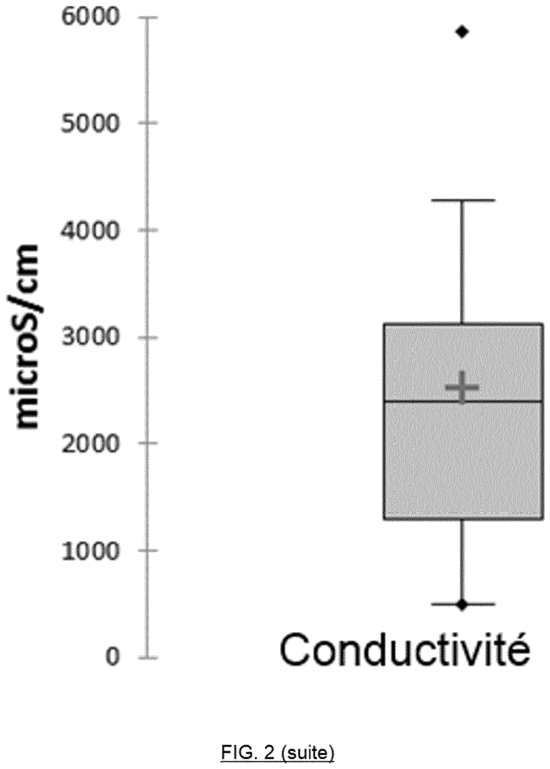

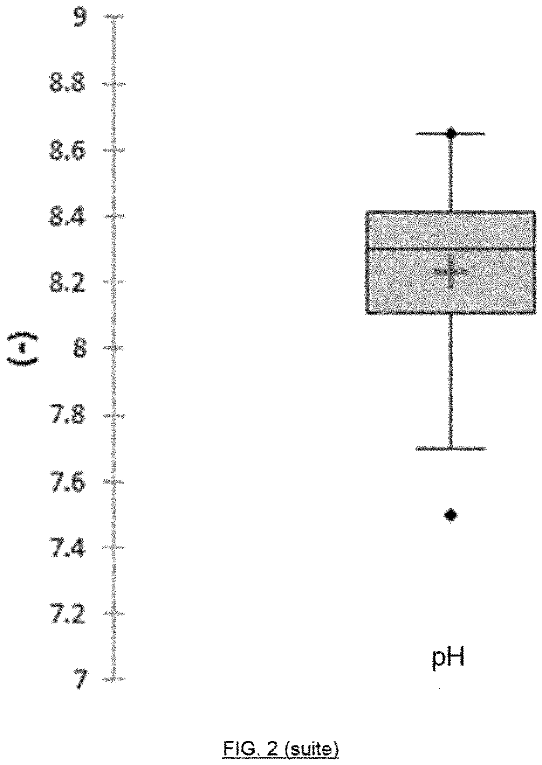

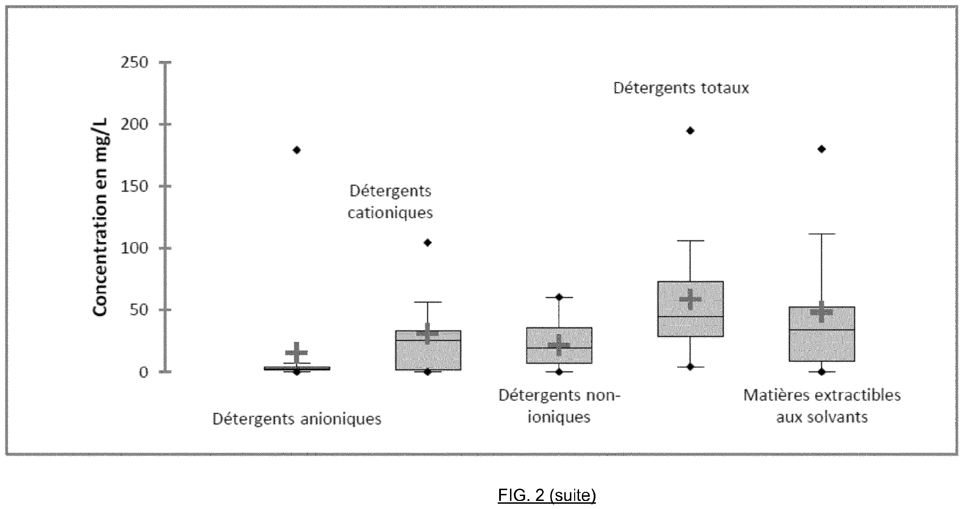

Par exemple, la Figure 2 donne, parmi d'autres paramètres (DCO, température, conductivité, pH, etc.) les concentrations des différents types de macropolluants (détergents) dans les eaux usées rejetées par l'hôpital. Chaque résultat correspond à une analyse de 10 et 17 échantillons. Les boîtes à moustache sont délimitées par les percentiles 25 et 75, les losanges correspondent aux valeurs extrêmes, la croix est la moyenne et la médiane est représentée par la ligne horizontale traversant la boîte à moustache.

Le pilote expérimental a été dimensionné pour traiter l'équivalent de rejet correspondant à un lit hospitalier, soit entre 300 et 500 litres par jour. Les paramètres opérationnels ont été optimisés afin d'accroître les rendements d'élimination des micropolluants et répondre aux exigences de la qualité des eaux en termes d'élimination des macropolluants. A titre d'exemple, le Tableau 2 présente les objectifs de qualité à atteindre pour les stations d'épuration de capacités comprises entre 10 000 et 100 000 EH.

Tableau 2: Norme de qualité des eaux de rejet (conforme à la directive 91/271/EEC)

| Paramètres | Unité(s) | Valeurs cibles |
|---|---|---|
| DCO | mg O$_2$ l$^{-1}$ | $\leq$ 125 |
| Nt | mg N l$^{-1}$ | $\leq$ 15 |
| MES | mg l$^{-1}$ | $\leq$ 35 |

Durant la période des essais, les rendements d'élimination des micropolluants ont été évalués pour différentes conditions opérationnelles (pO2, SRT et HRT), lesquelles peuvent stimuler l'installation de niches métaboliques spécifiques. En agissant sur ces paramètres clés, une attention particulière a été portée sur l'installation de métabolismes nitrifiants et dénitrifiants dans le compartiment MB-MBR. En effet, une biologie de ce type (dite nitrifiante ou à faible charge massique), est également plus efficace en termes de dégradation des micropolluants.

Les conditions de fonctionnement de l'unité MB-MBR et les performances d'élimination en macro- et micropolluants associées sont reprises ci-après. Les rendements sont exprimés en nombre décimal et sont calculés à partir de concentration avant traitement (C0) et après traitement (C). Un rendement de 1 équivaut à 100% d'élimination et de 0 à 0% d'élimination.

La première phase était consacrée à l'optimisation de la nitrification et la deuxième phase à l'amélioration du processus de dénitrification. Deux mécanismes de dénitrification ont été investigués : (1) la nitrification et dénitrification simultanée (SNDN) et (2) l'alternance de phases aérobies et anoxiques (ANDN). Le potentiel de nitrification et dénitrification actif simultané (SNDN) repose sur la présence d'un biofilm immobilisé sur les supports. Dans un réacteur unique, il s'agit de maintenir des conditions opératoires qui permettent aux bactéries hétérotrophes de dénitrifier dans des zones anoxies du biofilm, alors que la nitrification a lieu en périphérie de la biomasse dans les zones aérobies. L'avantage théorique de la stratégie SNDN est d'économiser le volume anoxique. Le mécanisme SNDN peut être expliqué par les limitations au transfert en oxygène au sein du biofilm (existence de zones aérobies et anoxies).

Les différents paramètres de fonctionnement de l'unité MB-MBR testés sont repris dans le Tableau 3.

*Tableau 3: Paramètres opérationnels de l'unité pilote*

| MB | | | | | |
|---|---|---|---|---|---|
| **Paramètres** | **Unité(s)** | **Min** | **Moyenne** | **Max** | **Écart-type** |
| **OPERATIONNELS** | | | | | |
| HRT (MB) | Heures | 8,8 | 15 | 28,2 | 2,5 |
| SRT | Jour $^{-1}$ | 17 | 35 | 50 | 16 |
| Température | °C | 15 | 19 | 25 | 3,1 |
| pH | - | 7,2 | 8 | 8,7 | 0,4 |
| **BIOLOGIE** | | | | | |
| $[MES]_{LM}$ | kg m$^{-3}$ | 1,3 | 4,8 | 13,3 | 1,9 |
| $MVS_{LM}$ | % | 55 | 74 | 85 | 8 |
| $[MES]_{biofilm}$ | kg m$^{-3}$ | 0,1 | 0,5 | 1 | 0,3 |
| Supports bactériens | % volume total | - | 30 | - | - |
| **CHARGES** | | | | | |
| Cv | kg DCO m$^{-3}$ j$^{-1}$ | 0,2 | 0,7 | 2,0 | 0,3 |
| Cm | kg DCO kg MVS$^{-1}$ j$^{-1}$ | 0,07 | 0,2 | 0,3 | 0,07 |
| **SNDN** | | | | | |
| Concentration $O_2$ | mg $O_2$ l$^{-1}$ | 1 | 1,6 | 2,4 | 0,7 |
| **ANDN** | | | | | |
| Concentration $O_2$ | mg $O_2$ l$^{-1}$ | 0,4 | 0,6 | 1,0 | 0,2 |
| Temps anoxie | min | 6,0 | 9,6 | 12,0 | 2,6 |
| Temps aérobie | min | 4,0 | 5,6 | 9,0 | 2,3 |
| Temps anoxie | % | 31 | 46 | 57 | 11 |
| **MBR** | | | | | |
| **Paramètres** | **Unité(s)** | **Min** | **Moyenne** | **Max** | **Écart-type** |
| Q surfac. (MBR) | l m$^{-2}$ h$^{-1}$ | 4 | 9 | 13 | 4,2 |
| Temps production | min | - | 12 | - | - |
| Tps. backwashing | min | - | 1 | - | - |

*Rendement sur les macropolluants*

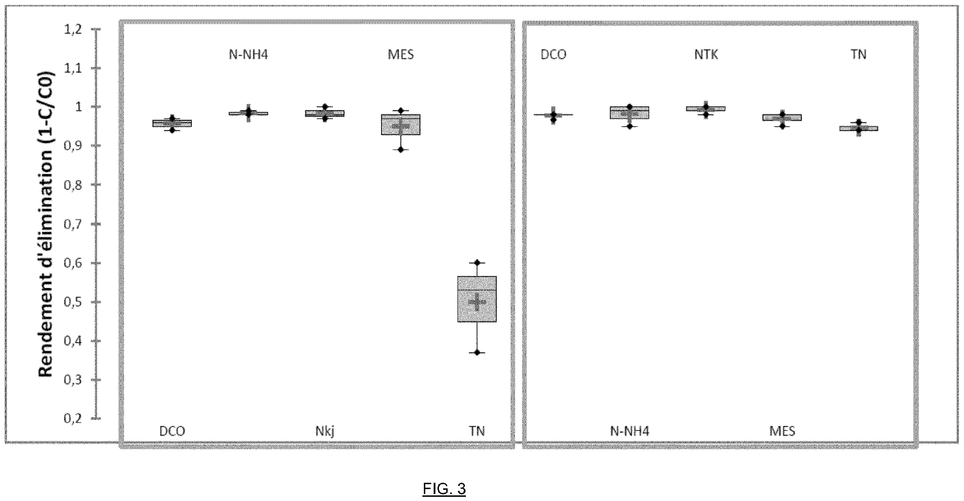

En moyenne, la qualité des effluents en sortie de MB-MBR est très bonne. Les concentrations en DCO et en matières en suspension (MES) sont respectivement en moyenne de 25 et 3 mg l$^{-1}$ (94 et 97 % de rendement d'élimination). Bien que l'étape de nitrification ne soit pas limitante (en moyenne N-NH$_4$ < 0,8 mg l$^{-1}$), les rendements d'élimination de l'azote total (TN sur la figure) restaient faibles (< 50 %) lorsque le pilote opérait en configuration SNDN. L'épaisseur du biofilm sur les supports bactériens n'était vraisemblablement pas suffisante pour permettre un gradient de concentration en oxygène induisant des conditions anoxiques. Le passage en alternance de phase a permis d'atteindre de bonnes performances avec une concentration en azote total en sortie du MB-MBR inférieure à 15 mg l$^{-1}$. La Figure 3 rassemble les rendements d'élimination des macropolluants pour les deux stratégies d'aération investiguées (dénitrification par SNDN à gauche, n=3 et ANDN, n=5 à droite). Les boîtes à moustache sont délimitées par les percentiles 25 et 75, les losanges correspondent au rendement minimum et maximum rencontré, la croix est la moyenne et la médiane est représentée par la ligne horizontale traversant la boîte à moustache.

*Rendement sur les micropolluants*

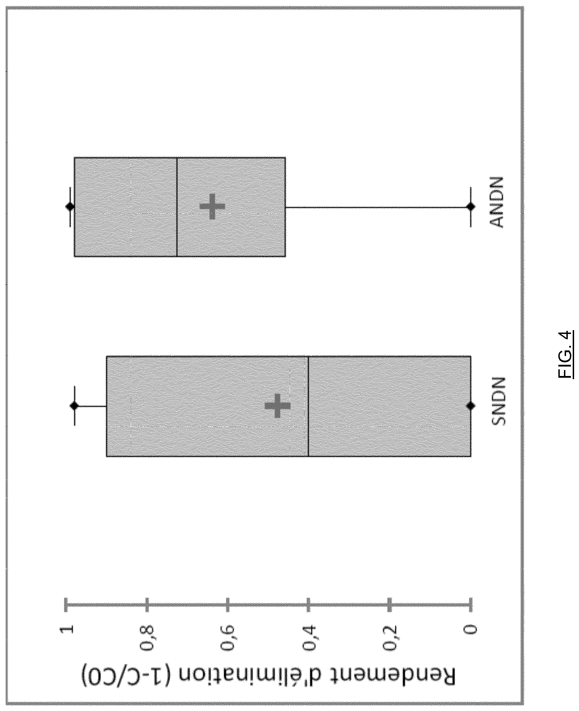

Les rendements correspondants pour l'ensemble des micropolluants sont repris à la Figure 4 (mêmes conventions statistiques que pour la Figure 3). Le rendement moyen d'élimination des *micropolluants* en conditions ANDN (bonne élimination de l'azote total) atteint 64 % contre 48% en SNDN. A noter que la stratégie ANDN montre des rendements beaucoup plus stables (écart inter-quantile, variance et écart-type plus faibles).

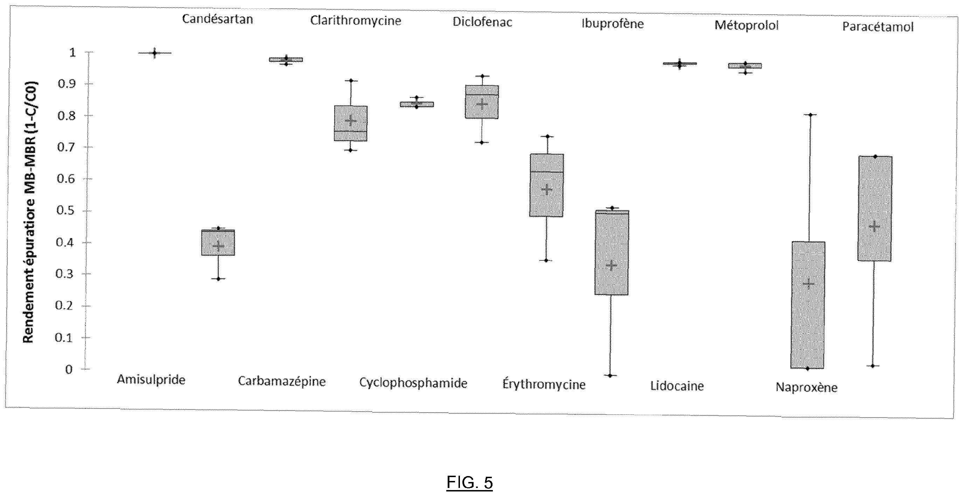

L'analyse des rendements épuratoires pour les molécules indicatrices est présentée à l'exception de trois molécules (carbamazépine, diclofénac, lidocaïne) qui n'ont pas pu être dosées à l'aide du protocole unique développé par le centre d'analyse. La Figure 5 montre le rendement épuratoire de la partie MB-MBR du procédé selon l'invention pour chacune des molécules indicatrices quantifiables. Les boîtes à moustache sont délimitées par les percentiles 25 et 75, les losanges correspondent au rendement minimum et maximum rencontré, la croix est la moyenne et la médiane est représentée par la ligne horizontale traversant la boîte à moustache.

*Microbiologie*

Une série d'analyses métagénomiques ont été effectuées tout au long du projet pour déterminer l'évolution de la diversité bactérienne dans le biofilm et la liqueur mixte. Des échantillons ponctuels de la liqueur mixte et du biofilm ont été prélevés à la fin de chaque phase clé du plan expérimental.

L'analyse de la diversité permet de déduire les informations suivantes :

1. Le nombre d'espèces diminue avec le temps aussi bien dans les échantillons « biofilm » que dans les échantillons « liqueur mixte ». Durant la première phase expérimentale (SNDN), une diversité plus importante est observée dans les communautés bactériennes du biofilm et de la liqueur mixte. Le changement de stratégie d'aération (passage SNDN et puis ANDN à partir de l'échantillon «jour 177 » fait chuter la diversité bactérienne d'environ 30%.

2. La structure des communautés bactériennes évolue vers un nombre restreint d'espèces pour les deux types de biomasse.

3. La diversité bactérienne est significativement influencée par la variable « temps », mais pas par la variable « type de biomasse ». En effet, la diversité bactérienne entre le biofilm et la liqueur mixte est proche.

Par exemple, les genres bactériens suivants sont spécialisées pour la colonisation du CAB, et sont non détectées dans le compartiment MB-MBR : Acidovorax, Alcaligenes , Gemmatimonas, Leuconostoc, Luteimonas, Methylophilus, Methylovorus, Myroides, Ornithinimicrobium, Paludibacter, Phenylobacterium, Polaromonas, Propogenium, Pseudoxanthomonas, Saccharibacter, Staphylococcus, Rhodobium, Saccharibacter, Terrimonas, et Xanthobacter.

Plus spécifiquement, les genres bactériens suivants semblent favoriser la régénération du CAB : Acidovorax, Gemmatimonas, , Luteimonas, Paludibacter, Phenylobacterium, Propogenium et Terrimonas.

Selon l'invention, ces bactéries peuvent avantageusement être considérées comme pouvant faire partie du second consortium microbien dans la cuve de biofiltration à CAB.

*Paramètres de fonctionnement optimaux des CAB*

Le charbon actif utilisé était sous forme GAC, par exemple de type Norit 830W (Cabot). Selon l'invention, on peut cependant utiliser plusieurs types de charbon actif, en faisant varier la nature du charbon, la surface spécifique développée et le type de pores.

Selon une modalité d'exécution, le GAC a été conditionné pendant 2 mois avec les effluents d'eaux usées provenant du MB-MBR avant placement en colonne de verre acrylique. Le fonctionnement a été monitoré pendant environ 5 mois. Le conditionnement a pour but de réduire le temps avant le point de percée (« breakthrough ») du filtre, c'est-à-dire le moment où la capacité d'adsorption est épuisée et où la biodégradation est le processus dominant.

Les performances d'épuration biologique des micropolluants ont été évaluées selon la méthodologie suivante :

1. Saturation des sites d'adsorption et vérification par mesure de l'abattement du carbone organique dissous ;
2. Evaluation de l'activité bactérienne via des mesures de consommation en oxygène ;
3. Analyses de corrélation entre l'activité bactérienne et l'élimination des micropolluants.

L'allure de la courbe d'élimination de la pollution carbonée (Dissolved Organic Carbon ou DOC) en fonction du volume traité, exprimé en nombre de volume de lit (*Bed volume (Nr), BV*), se divise en trois parties :

a. Une phase d'élimination de type I,
b. Une phase d'arrêt de l'élimination (« plateau »),
c. Une phase d'élimination de type II.

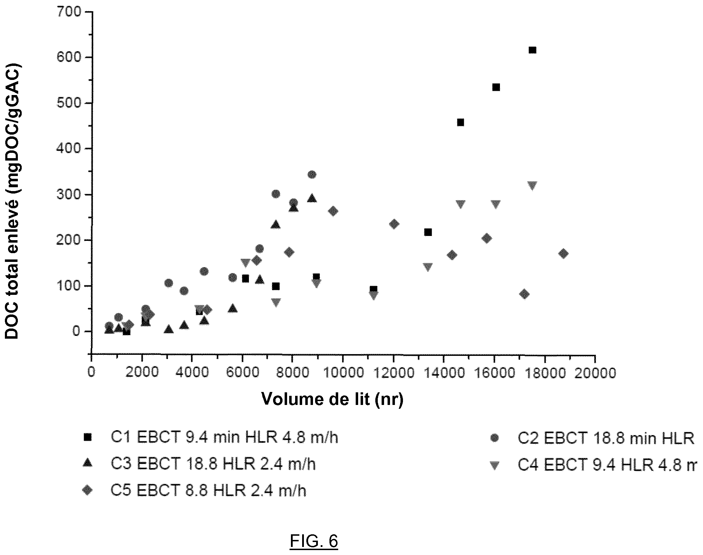

Le profil de la courbe d'élimination du DOC montre, sur la Figure 6, deux cinétiques d'élimination distinctes, le point de transition apparaissant à 6 000 BV (colonne C2 et C3) et à 13 000 BV (colonne C1, C4 et C5). La phase d'élimination de type II témoigne d'une activité bactérienne beaucoup plus importante que la phase de type I. La phase II de bioactivité commence après 60 jours.

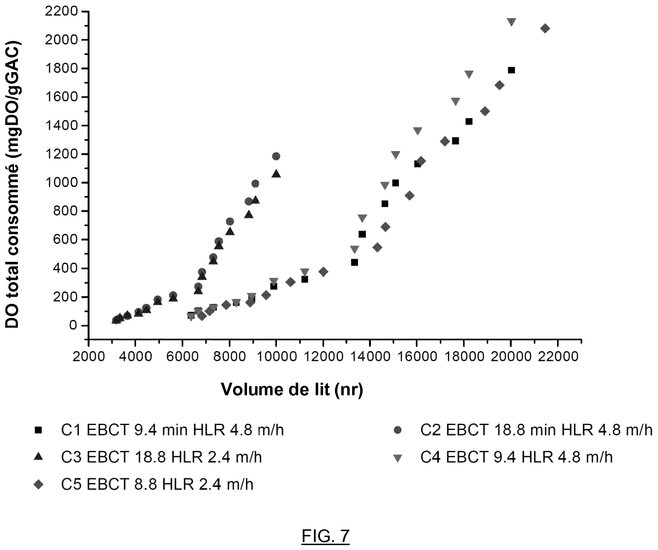

L'examen de la consommation cumulée en oxygène dissous (DO) montré sur la Figure 7 suggère le développement d'une activité microbienne (consommation d'oxygène) responsable de l'élimination du DOC observé après 6 000 BV et 13 000 BV pour les colonnes C2-C3 et les colonnes C1-C4-C5, respectivement.

Afin de mettre en lumière une activité biologique de dégradation des micropolluants, deux molécules ont été monitorées : la clarithromycine, molécule modérément biodégradable et la carbamazépine, molécule difficilement biodégradable (non représenté).

L'allure de la courbe de dégradation de la clarithromycine suit le même schéma que celle de la consommation en DOC (deux phases d'élimination séparées par une phase « plateau »). Cette observation suggère que le développement d'une activité bactérienne améliore l'élimination de ce micropolluant.

Le profil de la courbe d'abattement cumulé de la carbamazépine peut servir comme témoin (« blanc ») d'une colonne de charbon actif sans bioactivité. Deux régimes d'abattement sont clairement identifiables : jonction à 6000 BV (colonne C2 et C3) et à 13 000 BV (colonne C1, C4 et C5). Toutes précautions prises, il est raisonnable de conclure que l'activité microbienne contribue de façon significative à l'élimination des micropolluants comme le suggèrent les données présentées sur la Figure 7.

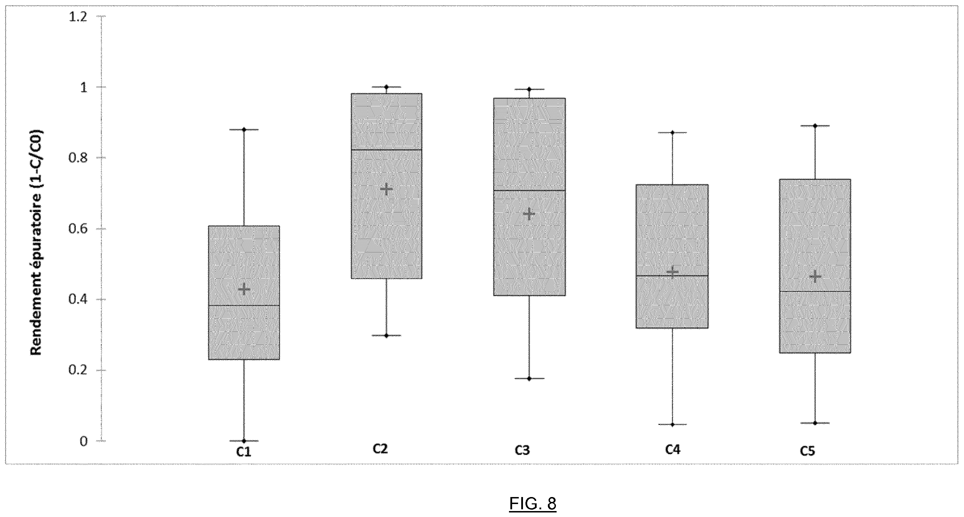

En fonction des paramètres opérationnels retenus pour les colonnes C1 à C5, les rendements épuratoires de 12 des 13 molécules indicatrices de l'efficacité du procédé sont présentés à la Figure 8. Les résultats montrent les meilleures performances pour les colonnes C2 et C3 avec un rendement moyen légèrement supérieur pour la colonne C2 (0,71 contre 0,64).

La colonne C2 atteint les meilleures performances globales pour un temps de contact hydraulique (Empty Bed Contact Time ou EBCT) de 18,8 min et un HLR de 4,8 mh$^{-1}$.

Certaines molécules facilement biodégradables comme le paracétamol, le naproxène ou l'ibuprofène montrent des rendements moyens inférieurs à 50%. Ces rendements faibles sont expliqués par une concentration en entrée proche de la LOQ.

*Contrainte de fonctionnement en vue du couplage MB-MBR-CAB*

On notera la nécessité d'installer une cuve tampon entre les deux étages biologiques (MB-MBR et CAB). Ce tampon hydraulique est nécessaire pour le contre-lavage des membranes du MBR et celui du charbon des colonnes de CAB. Cet ouvrage sera dimensionné sur base d'un temps de séjour hydraulique de 1 à 3 heures en fonction de la configuration et du nombre de colonnes CAB retenues.

*Procédé à deux étages - Rendements épuratoires*

Les rendements épuratoires du procédé selon l'invention ont été évalués en termes d'élimination des macro- et des micropolluants sur 6 échantillons moyens 24h. Le rendement épuratoire R (en pour cent) est défini comme suit :

$$R = 100x(1 - \frac{C}{C_0})$$

où Co et C sont respectivement les concentrations en entrée (influent) et en sortie (effluent, perméat) des polluants respectifs.

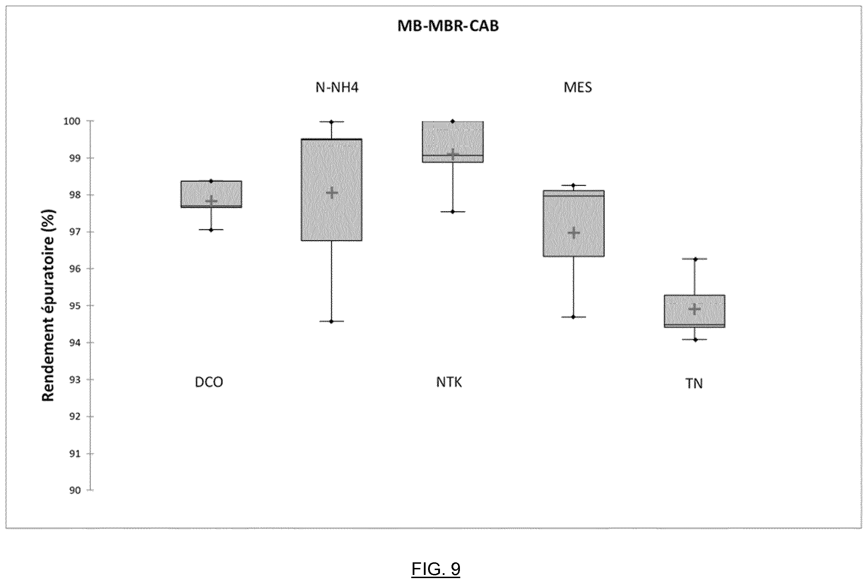

La grande majorité de l'élimination des macropolluants a lieu dans le MB-MBR (rendement CAB < 1% du rendement global pour la DCO et l'azote). Les résultats sont repris à la Figure 9.

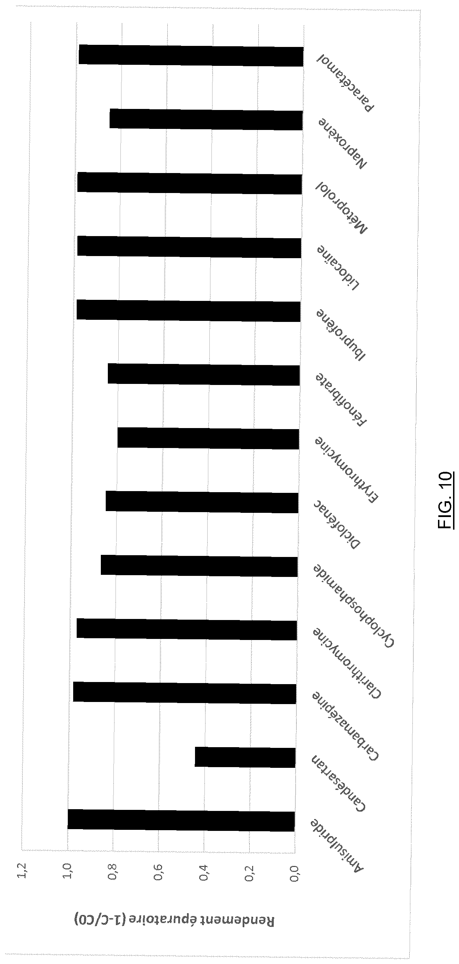

Sur les treize molécules indicatrices, douze montrent un rendement épuratoire global supérieur ou égal à 80% (Figure 10). Parmi celles-ci, la clarithromycine, l'érythromycine et le diclofénac sont repris dans la liste de vigilance européenne (UE 2015/495).

Le candésartan, un antihypertenseur, est caractérisé par un rendement d'élimination légèrement supérieur à 40%. Peu de références sont retrouvées dans la littérature sur son élimination par voie biologique. Gurke *et al.* (2015) ont analysé les charges en candésartan en entrée et sortie de station d'épuration biologique. Sur les dix échantillons analysés, le rendement moyen d'élimination est égal à 0% avec un écart type de +/-10 %. Cela montre la difficulté d'élimination de ce composé par des traitements biologiques. Pour le reste des molécules, l'efficacité du procédé selon l'invention est bien confirmée.

En conclusion, les rendements épuratoires, comme définis ci-dessus, ont été calculés pour un pilote en conditions stationnaires dont les paramètres de fonctionnement ont été optimisés lors de la phase expérimentale. Le rendement épuratoire moyen de plusieurs molécules est défini comme la moyenne arithmétique des rendements épuratoires respectifs. Sur les treize micropolluants retenus comme molécules indicatrices du bon fonctionnement du process, douze montrent un rendement d'élimination moyen supérieur ou égal à 80%. Parmi ceux-ci, la clarithromycine, l'érythromycine et le diclofénac sont présents sur la liste de vigilance européenne. Le candésartan, un antihypertenseur très difficilement biodégradable, est caractérisé par un rendement d'élimination moyen de 44%.

La synthèse des résultats montre que le procédé développé dans le cadre de l'invention est particulièrement efficace pour des molécules difficilement biodégradables (le candésartan, le cyclophosphamide, le diclofénac et le métoprolol). Le rendement moyen des treize molécules s'élève à 89% avec un écart type de 15%.

Une analyse plus fine sur 16 molécules montre que deux groupes différents de composés peuvent être décrits. Le premier groupe comprend tous les composés qui ont été dégradés à plus de 80% en moyenne (amisulpride, carbamazépine, hydrochlorothiazide et métoprolol) avec une faible variation (dispersion, écart-type). Le second groupe comprend les composés pour lesquels la dégradation moyenne est aux alentours de 50% avec une variation assez élevée (ex. clarithromycine, cyclophosphamide, diclofénac). Ce groupe est le plus intéressant car apparemment certaines conditions de colonne favorisent une bonne dégradation et d'autres conditions pas. On a pu montrer que la clarithromycine, le cyclophosphamide et le diclofénac ont été mieux dégradés avec des EBCT plus longs (par ex. 19 minutes). En outre, des vitesses de filtration HLR plus élevées (par ex. 4,8 m/h) rendent les colonnes plus efficaces que des HLR plus faibles (par ex. 2,4 m/h).

Symboles de référence

1    Eau usée
2    Eau traitée (rejet)
3    Air
4    Boue
10    Tampon de prétraitement
11    MB-MBR
12    Biofiltration
13    Traitement de l'air

Liste des abréviations

| Abréviation | Signification | Unité |
|---|---|---|
| AOP | Advanced oxydation process | |
| BAC | Boues activées conventionnelles - en anglais : Conventional activated sludge CAS) | |
| BV | Bed volume ou volume de lit | (-) |
| CA | Charbon actif | |
| CAB | Charbon activé biologiquement | (-) |
| CAG | Charbon actif en grains- en anglais : Granulated activated carbon (GAC) | |
| CAP | Charbon actif en poudre | |
| DCO | Demande chimique en oxygène - en anglais : Chemical oxygen demand (COD) | mg $O_2$ $l^{-1}$ |
| DO | Dissolved oxygen | mg $O_2$ $l^{-1}$ |
| DOC | Dissolved Organic Carbon | mg C $l^{-1}$ |
| EBCT | Empty bed contact time | min |
| EH | Equivalent habitant | (-) |

**EP 3 684 734 B1**

(suite)

| Abréviation | Signification | Unité |
|---|---|---|
| HLR | Hydraulic loading rate | m h$^{-1}$ |
| HRT | Hydraulic retention time | h |
| LOQ | Limit of quantification | |
| MB-MBR | Moving bed - Membrane bioreactor | (-) |
| MES | Matière en suspension | mg l$^{-1}$ |
| MVS | Matière volatile en suspension | mg l$^{-1}$ |
| Nr | Nombre | (-) |
| Nt (ou TN) | Azote total | |
| NTK | Azote (Kjeldahl) total | mg N l$^{-1}$ |
| SRT | Solids retention time | |

Références bibliographiques

Andersson, S. 2009. Characterization of Bacterial Biofilms for Wastewater Treatment. School of Biotechnology, Royal Institute of Technology (KTH), Sweden.

Aubenneau, M., Tahar, A., Casellas, C., & Wisniewski, C. 2010. Membrane bioreactor for pharmaceutically active compounds removal: Effects of carbamazepine on mixed microbial communities implied in the treatment. Bioprocess Engineering - SFGP2009 45, 1826-1831.

Chang, S., Waite, T.D., Schafer, A.I., & Fane, A.G. 2003. Adsorption of the endocrine-active compound estrone on microfiltration hollow fiber membranes. Environmental science & technology 37, 3158-3163.

Chu, L., & Wang, J. 2011. Comparison of polyurethane foam and biodegradable polymer as carriers in moving bed biofilm reactor for treating wastewater with a low C/N ratio. Chemosphere 83, 63-68.

Cicek, N., Macomber, J., Davel, J., Suidan, M., Audic, J., & Genestet, P. 2001. Effect of solids retention time on the performance and biological characteristics of a membrane bioreactor. Water Science & Technology 43, 43-50.

Clara, M., Strenn, B., Gans, O., Martinez, E., Kreuzinger, N., & Kroiss, H. 2005. Removal of selected pharmaceuticals, fragrances and endocrine disrupting compounds in a membrane bioreactor and conventional wastewater treatment plants. Water Research 39, 4797-4807.

Falås, P., Baillon-Dhumez, A., Andersen, H.R., Ledin, A., & la Cour Jansen, J. 2012. Suspended biofilm carrier and activated sludge removal of acidic pharmaceuticals. Water Research 46, 1167-1175.

Falås, P., Longrée, P., la Cour Jansen, J., Siegrist, H., Hollender, J., & Joss, A. 2013. Micropollutant removal by attached and suspended growth in a hybrid biofilm-activated sludge process. Water Research 47 4498-4506.

JIANG QI ET AL: "Effect of hydraulic retention time on the performance of a hybrid moving bed biofilm reactor-membrane bioreactor system for micropollutants removal from municipal wastewater", BIORESOURCE TECHNOLOGY, vol. 247, 1228-1232

Joss, A., Zabczynski, S., Göbel, A., Hoffmann, B., Löffler, D., McArdell, C.S., Ternes, T.A., Thomsen, A., & Siegrist, H. 2006. Biological degradation of pharmaceuticals in municipal wastewater treatment: proposing a classification scheme. Water Research 40, 1686-1696.

Luo, Y., Guo, W., Ngo, H.H., Nghiem, L.D., Hai, F.I., Kang, J., Xia, S., Zhang, Z., & Price, W.E. 2014. Removal and fate of micropollutants in a sponge-based moving bed bioreactor. Bioresource Technology 159, 311-319.

Ngo, H.-H., Guo, W., & Xing, W. 2008. Evaluation of a novel sponge-submerged membrane bioreactor (SSMBR) for sustainable water reclamation. Bioresource Technology 99, 2429-2435.

Nguyen, L.N., Hai, F.I., Kang, J., Price, W.E., & Nghiem, L.D. 2012. Removal of trace organic contaminants by a membrane bioreactor-granular activated carbon (MBR-GAC) system. Special issue on the Challenges in Environmental Science and Engineering 113, 169-173.

Nguyen, L.N., Hai, F.I., Kang, J., Price, W.E., & Nghiem, L.D. 2013. Coupling granular activated carbon adsorption with membrane bioreactor treatment for trace organic contaminant removal: Breakthrough behaviour of persistent and hydrophilic compounds. Journal of Environmental Management 119, 173-181.

PAREDES L ET AL: "Understanding the fate of organic micropollutants in sand and granular activated carbon biofiltration systems", SCIENCE OF THE TOTAL ENVIRONMENT, vol. 551, 640-648.

Radjenovic, J., Petrovic, M., & Barceló, D. 2007. Analysis of pharmaceuticals in wastewater and removal using a membrane bioreactor. Analytical and Bioanalytical Chemistry 387, 1365-1377.

Rodríguez-Hernández, L., Esteban-García, A.L., & Tejero, I. 2014. Comparison between a fixed bed hybrid membrane bioreactor and a conventional membrane bioreactor for municipal wastewater treatment: A pilot-scale study. Bioresource Technology 152, 212-219.

Roh, H., Subramanya, N., Zhao, F., Yu, C.-P., Sandt, J., & Chu, K.-H. 2009. Biodegradation potential of wastewater micropollutants by ammonia-oxidizing bacteria. Chemosphere 77, 1084-1089.

Weiss, S., & Reemtsma, T. 2008. Membrane bioreactors for municipal wastewater treatment-A viable option to reduce the amount of polar pollutants discharged into surface waters? Water research 42, 3837-3847.

De Wever, H., Weiss, S., Reemtsma, T., Vereecken, J., Müller, J., Knepper, T., Rörden, O., Gonzalez, S., Barcelo, D., & Dolores Hernando, M. 2007. Comparison of sulfonated and other micropollutants removal in membrane bioreactor and conventional wastewater treatment. Water research 41, 935-945. Zupanc, M., Kosjek, T., Petkovsek, M., Dular, M., Kompare, B., Sirok, B., Blazeka, Z., & Heath, E. 2013. Removal of pharmaceuticals from wastewater by biological processes, hydrodynamic cavitation and UV treatment. Ultrasonics Sonochemistry 20, 1104-1112.

**Revendications**

1. Un procédé complètement biologique pour éliminer un premier groupe de micropolluants d'origine pharmaceutique et un second groupe de micropolluants d'origine pharmaceutique dans des eaux usées, le procédé comprenant les étapes de :

   - fournir une première cuve tampon (10) en amont du bioréacteur ;
   - fournir un bioréacteur (11) à membranes et à lit mobile (MB-MBR) pour développer une croissance de biomasse à la fois sur support fixe et en suspension sous forme de flocs, et sur des supports mobiles, ledit bioréacteur (11) étant configuré pour obtenir un effluent avec une concentration DCO de matière organique inférieure à 50 mg l$^{-1}$ et une concentration en azote total inférieure à 15 mg l$^{-1}$ ;
   - fournir une cuve de biofiltration (12), distincte de la cuve du bioréacteur, comprenant une ou plusieurs colonnes à charbon activé biologiquement (CAB) contenant du charbon actif ;
   - alimenter la première cuve tampon (10) en amont du bioréacteur avec des eaux usées (1) comprenant des micropolluants d'origine pharmaceutique ;
   - prétraiter lesdites eaux usées comprenant des micropolluants d'origine pharmaceutique par passage dans un tamis à mailles fines, de manière à retenir les particules ayant un diamètre supérieur à 1 mm ;
   - dans un premier traitement, introduire les eaux usées (1), une fois tamisées, dans le bioréacteur (11) peuplé et éventuellement ensemencé d'un premier consortium microbien se trouvant et/ou se développant sur les parties fixes et en suspension sous forme de flocs, et sur les supports mobiles, pendant un premier temps de rétention ;
   - introduire un second consortium microbien dans la cuve de biofiltration ;
   - dans un second traitement, introduire les eaux usées (1) traitées par le bioréacteur (11) dans la cuve de biofiltration (12) et laisser adsorber les résidus de micropolluants d'origine pharmaceutique sur le charbon actif ;
   - laisser coloniser le charbon actif ayant préalablement adsorbé les résidus de micropolluants d'origine pharmaceutique par le second consortium microbien sous forme de biofilms, laisser biodégrader lesdits résidus par le second consortium microbien et laisser biorégénérer le charbon actif, pendant un second temps de rétention ;
   - rejeter dans l'environnement les eaux usées traitées (2),

   le temps de rétention hydraulique total, constitué de la somme du premier temps de rétention et du second temps de rétention, étant déterminé pour obtenir un rendement épuratoire (R) moyen des micropolluants d'origine pharmaceutique du premier groupe dans les eaux usées traitées (2) supérieur à 80%, de préférence supérieur à 95%, et un rendement épuratoire moyen des micropolluants d'origine pharmaceutique du second groupe supérieur à 40-50%, en référence à leur teneur ($C_0$) dans les eaux usées de départ (1) ; le procédé comportante les étapes complémentaires suivantes :

   - fournir une seconde cuve tampon insérée entre le bioréacteur (11) à membranes et à lit mobile (MB-MBR) et la cuve de biofiltration (12) ;
   - en fonctionnement normal, alimenter la seconde cuve tampon avec l'effluent du premier traitement et alimenter le second traitement à partir de la seconde cuve tampon ;
   - effectuer un contre-lavage séparé des membranes du bioréacteur et du charbon activé biologiquement, sans communication grâce à la cuve tampon.

2. Le procédé selon la revendication 1, **caractérisé en ce que** la cuve du bioréacteur (11) à membranes et à lit mobile (MB-MBR) est séparé de la cuve de biofiltration (12) par une membrane d'ultrafiltration, afin de séparer le premier et le second consortia microbiens.

3. Le procédé selon la revendication 1, **caractérisé en ce que** le temps de contact hydraulique ou EBCT par colonne à charbon activé biologiquement CAB est supérieur à 10 minutes, de préférence est compris entre 10 et 20 minutes avec une vitesse de filtration HLR comprise entre 2 et 5 mh$^{-1}$.

4. Le procédé selon la revendication 1, **caractérisé en ce que** les micropolluants d'origine pharmaceutique du premier groupe considérés dans le procédé sont au moins sélectionnés dans le groupe constitué de l'amisulpride, la carbamazépine, l'hydrochlorothiazide et le métoprolol.

5. Le procédé selon la revendication 1, **caractérisé en ce que** les micropolluants d'origine pharmaceutique du second groupe considérés dans le procédé sont au moins sélectionnés dans le groupe constitué de la clarithromycine, du cyclophosphamide et du diclofénac.

6. Le procédé selon la revendication 1, **caractérisé en ce qu'**on ensemence dans le bioréacteur à membranes par un premier consortium de microorganismes externes, pour coloniser des parties fixes et les supports mobiles avec lesdits microorganismes et mettre en culture un biofilm sur ces parties fixes et supports mobiles afin d'immobiliser lesdits microorganismes.

7. Le procédé selon la revendication 1, **caractérisé en ce que** les microorganismes du second consortium proviennent de l'effluent du bioréacteur et/ou sont au moins en partie différents de ceux du premier consortium, suite à une auto-sélection au cours du temps.

8. Le procédé selon la revendication 1, **caractérisé en ce que** le charbon activé biologiquement est mis en œuvre sous forme de charbon actif en poudre, en grains ou en micrograins.

9. Le procédé selon la revendication 1, **caractérisé en ce qu'**une étape supplémentaire de purification de l'air issu de la filière de traitement des eaux usées est mise en œuvre, notamment en vue d'éliminer les odeurs, au moyen d'ozone, de rayonnement ultraviolet ou de charbon actif.

10. Installation pour la mise en œuvre du procédé selon l'une quelconque des revendications précédentes, **caractérisé en ce qu'**elle comprend :

   - une première cuve tampon (10) pour une alimentation stable en eaux usées contenant des micropolluants d'origine pharmaceutique ;
   - une unité de pompage ;
   - une étape de prétraitement incluant au moins un tamis à mailles fines pour la rétention des particules ayant un diamètre supérieur à 1 mm ;
   - un bioréacteur (11) à membranes et à lit mobile (MB-MBR) pour développer une croissance de biomasse à la fois sur support fixe et en suspension sous forme de flocs, et sur des supports mobiles ;
   - au moins une cuve de biofiltration sur charbon activé biologiquement (12) distincte de la cuve du bioréacteur (11), séparée de celui-ci par une membrane d'ultrafiltration et située en aval de celui-ci, comprenant une ou plusieurs colonnes à charbon activé biologiquement (CAB) ;
   - une seconde cuve tampon insérée entre le bioréacteur à membrane (11) et la cuve de biofiltration (12) pour le contre-lavage séparé des membranes du bioréacteur et du charbon activé biologiquement ;
   - des unités de stockage et dosage de produits chimiques ;
   - un système de traitement de l'air et des odeurs (13).

**Patentansprüche**

1. Verfahren, das vollständig biologisch ist, um eine erste Gruppe von Mikroschadstoffen pharmazeutischen Ursprungs und eine zweite Gruppe von Mikroschadstoffen pharmazeutischen Ursprungs aus den Abwässern zu entfernen, wobei das Verfahren die folgenden Schritte umfasst:

- Bereitstellen eines ersten Pufferbehälters (10) stromaufwärts vom Bioreaktor;
- Bereitstellen eines Bioreaktors (11) mit Membranen und beweglichem Bett (MB-MBR), um ein Biomassewachstum sowohl auf einem festen Träger und in Suspension in Form von Flocken als auch auf beweglichen Trägern zu entwickeln, wobei der Bioreaktor (11) ausgelegt ist, um ein Abwasser mit einer CSB-Konzentration organischen Materials von unter 50 mg l$^{-1}$ und einer Gesamtstickstoffkonzentration von unter 15 mg l$^{-1}$ zu erhalten;
- Bereitstellen eines Biofiltrationsbehälters (12), der sich von dem Behälter des Bioreaktors unterscheidet und eine oder mehrere Kolonnen mit biologisch aktivierter Kohle (BAK), die Aktivkohle enthalten, umfasst;
- Versorgen des ersten Pufferbehälters (10) stromaufwärts vom Bioreaktor mit Abwässern (1), die Mikroschadstoffe pharmazeutischen Ursprungs umfassen;
- Vorbehandeln der Abwässer, die Mikroschadstoffe pharmazeutischen Ursprungs umfassen, durch Hindurchleiten durch ein feinmaschiges Sieb, um die Partikel zurückzuhalten, die einen Durchmesser von über 1 mm haben;
- In einer ersten Behandlung, Einleiten der gesiebten Abwässer (1) in den Bioreaktor (11), der mit einem ersten Mikrobenkonsortium bevölkert und eventuell beimpft wird, das sich auf den festen Teilen und in Suspension in Form von Flocken und auf den beweglichen Trägern befindet und/oder entwickelt, während einer ersten Verweilzeit;
- Einleiten eines zweiten Mikrobenkonsortiums in den Biofiltrationsbehälter;
- In einer zweiten Behandlung, Einleiten der vom Bioreaktor (11) behandelten Abwässer (1) in den Biofiltrationsbehälter (12) und Adsorbierenlassen der Reste von Mikroschadstoffen pharmazeutischen Ursprungs auf der Aktivkohle;
- Besiedelnlassen der Aktivkohle, die vorher die Reste von Mikroschadstoffen pharmazeutischen Ursprungs adsorbiert hatte, durch das zweite Mikrobenkonsortium in Form von Biofilmen, biologisches Aubbauenlassen der Reste durch das zweite Mikrobenkonsortium und biologisches Regenerierenlassen der Aktivkohle, während einer zweiten Verweilzeit;
- Ausleiten der behandelten Abwässer (2) in die Umwelt,

wobei die gesamte hydraulische Verweilzeit, die aus der Summe der ersten Verweilzeit und der zweiten Verweilzeit gebildet ist, bestimmt wird, um eine durchschnittliche Reinigungsleistung (R) von Mikroschadstoffen pharmazeutischen Ursprungs der ersten Gruppe in den behandelten Abwässern (2) von über 80 %, vorzugsweise von über 95 % und eine durchschnittliche Reinigungsleistung von Mikroschadstoffen pharmazeutischen Ursprungs der zweiten Gruppe von über 40-50 % in Bezug auf ihren Gehalt ($C_0$) in den Ausgangsabwässern (1) zu erhalten;
wobei das Verfahren die folgenden komplementären Schritte umfasst:

- Bereitstellen eines zweiten Pufferbehälters, der zwischen dem Bioreaktor (11) mit Membranen und beweglichem Bett (MB-MBR) und dem Biofiltrationsbehälter (12) angeordnet ist;
- bei normalem Betrieb, Versorgen des zweiten Pufferbehälters mit dem Abwasser der ersten Behandlung und Versorgen der zweiten Behandlung ab dem zweiten Pufferbehälter;
- Durchführen einer separaten Rückspülung der Membranen des Bioreaktors und der biologisch aktivierten Kohle ohne Kommunikation dank dem Pufferbehälter.

2. Verfahren nach Anspruch 1, **dadurch gekennzeichnet, dass** der Behälter des Bioreaktors (11) mit Membranen und mit beweglichem Bett (MB-MBR) vom Biofiltrationsbehälter (12) durch eine Ultrafiltrationsmembran getrennt ist, um das erste und das zweite Mikrobenkonsortium zu trennen.

3. Verfahren nach Anspruch 1, **dadurch gekennzeichnet, dass** die hydraulische Leerbettkontaktzeit oder EBCT je Kolonne mit biologisch aktivierter Kohle BAK über 10 Minuten beträgt, vorzugsweise zwischen 10 und 20 Minuten liegt, mit einer Filtrationsgeschwindigkeit HLR zwischen 2 et 5 mh$^{-1}$.

4. Verfahren nach Anspruch 1, **dadurch gekennzeichnet, dass** die im Verfahren betrachteten Mikroschadstoffe pharmazeutischen Ursprungs der ersten Gruppe mindestens aus der Gruppe ausgewählt sind, die aus Amisulprid, Carbamazepin, Hydrochlorothiazid und Metoprolol besteht.

5. Verfahren nach Anspruch 1, **dadurch gekennzeichnet, dass** die im Verfahren betrachteten Mikroschadstoffe pharmazeutischen Ursprungs der zweiten Gruppe mindestens aus der Gruppe ausgewählt sind, die aus Clarithromycin, Cyclophosphamid und Diclofenac besteht.

6. Verfahren nach Anspruch 1, **dadurch gekennzeichnet, dass** der Bioreaktor mit Membranen mit einem ersten Konsortium externer Mikroorganismen beimpft wird, um feste Teile und die beweglichen Träger mit den Mikroorganismen zu besiedeln und einen Biofilm auf diesen festen Teilen und beweglichen Trägern zu kultivieren, um die Mikroorganismen zu immobilisieren.

7. Verfahren nach Anspruch 1, **dadurch gekennzeichnet, dass** die Mikroorganismen des zweiten Konsortiums aus dem Abwasser des Bioreaktors kommen und/oder mindestens teilweise von denen des ersten Konsortiums infolge einer Selbstselektion im Laufe der Zeit unterschiedlich sind.

8. Verfahren nach Anspruch 1, **dadurch gekennzeichnet, dass** die biologisch aktivierte Kohle in Form von pulverförmiger, gekörnter oder mikrogekörnter Aktivkohle verwendet wird.

9. Verfahren nach Anspruch 1, **dadurch gekennzeichnet, dass** ein zusätzlicher Reinigungsschritt der Luft, die aus der Behandlungslinie der Abwässer entweicht, durchgeführt wird, insbesondere zwecks Entfernung von Gerüchen mittels Ozons, Ultraviolettstrahlung oder Aktivkohle.

10. Anlage zur Durchführung des Verfahrens nach einem der vorangehenden Ansprüche, **dadurch gekennzeichnet, dass** sie Folgendes umfasst:

    - einen ersten Pufferbehälter (10) für die stabile Versorgung mit Abwässern, die Mikroschadstoffe pharmazeutischen Ursprungs enthalten;
    - eine Pumpeinheit;
    - einen Vorbehandlungsschritt, der mindestens ein feinmaschiges Sieb zum Zurückhalten der Partikel mit einem Durchmesser von über 1 mm umfasst;
    - einen Bioreaktor (11) mit Membranen und mit beweglichem Bett (MB-MBR) zur Entwicklung eines Biomassewachstum sowohl auf einem festen Träger und in Suspension in Form von Flocken als auch auf beweglichen Trägern;
    - mindestens einen Behälter zur Biofiltration auf biologisch aktivierter Kohle (12), der sich vom Behälter des Bioreaktors (11) unterscheidet, von letzterem durch eine Ultrafiltrationsmembran getrennt ist und sich stromabwärts von diesem befindet, und der eine oder mehrere Kolonnen mit biologisch aktivierter Kohle (BAK) umfasst;
    - einen zweiten Pufferbehälter, der zwischen dem Bioreaktor mit Membran (11) und dem Biofiltrationsbehälter (12) für die separate Rückspülung der Membranen des Bioreaktors und der biologisch aktivierten Kohle angeordnet ist;
    - Lager- und Dosiereinheiten für chemische Produkte;
    - ein System zur Behandlung der Luft und der Gerüche (13).

## Claims

1. A completely biological method for removing a first group of micropollutants of pharmaceutical origin and a second group of micropollutants of pharmaceutical origin from wastewater, the method comprising the steps of:

    - providing a first buffer tank (10) upstream of the bioreactor;
    - providing a moving bed membrane bioreactor (MB-MBR) (11) for developing biomass growth both on a fixed support and in suspension in the form of flocs, and on mobile supports, said bioreactor (11) being configured to obtain an effluent with a COD concentration of organic matter of less than 50 mg $l^{-1}$ and a total nitrogen concentration of less than 15 mg $l^{-1}$;
    - providing a biofiltration tank (12), separate from the tank of the bioreactor, comprising one or more biologically activated carbon (BAC) columns containing activated carbon;
    - supplying the first buffer tank (10) upstream of the bioreactor with wastewater (1) comprising micropollutants of pharmaceutical origin;
    - pretreating said wastewater comprising micropollutants of pharmaceutical origin by passing it through a fine mesh sieve, so as to retain particles having a diameter greater than 1 mm;
    - in a first treatment, introducing the wastewater (1), once sifted, into the populated bioreactor (11) possibly seeded with a first microbial consortium located and/or developing on the fixed parts and in suspension in the form of flocs, and on the mobile supports, during a first retention time;
    - introducing a second microbial consortium in the biofiltration tank;
    - in a second treatment, introducing the wastewater (1) treated by the bioreactor (11) into the biofiltration tank (12) and allowing the residues of micropollutants of pharmaceutical origin to be adsorbed onto the activated carbon;

- allowing the activated carbon which has previously adsorbed the residues of micropollutants of pharmaceutical origin to be colonized by the second microbial consortium in the form of biofilms, allowing said residues to be biodegraded by the second microbial consortium and allowing the activated carbon to bioregenerate, during a second retention time;
- discharging the treated wastewater (2) into the environment,

the total hydraulic retention time, consisting of the sum of the first retention time and the second retention time, being determined to obtain an average purification efficiency (R) of the micropollutants of pharmaceutical origin of the first group in the treated wastewater (2) greater than 80%, preferably greater than 95%, and an average purification efficiency of micropollutants of pharmaceutical origin of the second group greater than 40-50%, with reference to their content ($C_0$) in the raw wastewater (1);

the method comprising the following additional steps:

- providing a second buffer tank inserted between the moving bed membrane bioreactor (MB-MBR) (11) and the biofiltration tank (12);
- in normal operation, supplying the second buffer tank with the effluent from the first treatment and supplying the second treatment from the second buffer tank;
- performing separate backwashing of the membranes of the bioreactor and of the biologically activated carbon, without communication thanks to the buffer tank.

2. The method according to claim 1, **characterized in that** the tank of the moving bed membrane bioreactor (MB-MBR) (11) is separated from the biofiltration tank (12) by an ultrafiltration membrane, so as to separate the first and second microbial consortia.

3. The method according to claim 1, **characterized in that** the hydraulic contact time or EBCT per biologically activated carbon BAC column is greater than 10 minutes, preferably between 10 and 20 minutes with a filtration rate HLR between 2 and 5 mh$^{-1}$.

4. The method according to claim 1, **characterized in that** the micropollutants of pharmaceutical origin of the first group considered in the method are at least selected from the group consisting of amisulpride, carbamazepine, hydrochlorothiazide and metoprolol.

5. The method according to claim 1, **characterized in that** the micropollutants of pharmaceutical origin of the second group considered in the method are at least selected from the group consisting of clarithromycin, cyclophosphamide and diclofenac.

6. The method according to claim 1, **characterized in that** the membrane bioreactor is seeded by a first consortium of external microorganisms to colonize fixed parts and the mobile supports with said microorganisms and to grow a biofilm on these fixed parts and mobile supports so as to immobilize said microorganisms.

7. The method according to claim 1, **characterized in that** the microorganisms of the second consortium come from the effluent of the bioreactor and/or are at least in part different from those of the first consortium, following self-selection over time.

8. The method according to claim 1, **characterized in that** the biologically activated carbon is used in the form of powdered, granular or microgranular activated carbon.

9. The method according to claim 1, **characterized in that** an additional step of purifying the air from the wastewater treatment system is implemented, in particular with a view to eliminating odors, by means of ozone, ultraviolet radiation or activated carbon.

10. Plant for implementing the method according to any one of the preceding claims, **characterized in that** it comprises:

- a first buffer tank (10) for a stable supply of wastewater containing micropollutants of pharmaceutical origin;
- a pumping unit;
- a pretreatment step including at least one fine mesh sieve for the retention of particles having a diameter greater than 1 mm;

- a moving bed membrane bioreactor (MB-MBR) (11) for developing biomass growth both on a fixed support and in suspension in the form of flocs, and on mobile supports;

- at least one biofiltration tank on biologically activated carbon (12) distinct from the tank of the bioreactor (11), separated from the latter by an ultrafiltration membrane and located downstream of the latter, comprising one or more columns with biologically activated carbon (BAC);

- a second buffer tank inserted between the membrane bioreactor (11) and the biofiltration tank (12) for the separate backwashing of the membranes of the bioreactor and of the biologically activated carbon;

- storage and dosing units for chemicals;

- an air and odor treatment system (13).

FIG. 1

FIG. 2

FIG. 2 (suite)

FIG. 2 (suite)

FIG. 2 (suite)

FIG. 2 (suite)

FIG. 2 (suite)

FIG. 3

FIG. 4

FIG. 5

FIG. 6

FIG. 7

FIG. 8

FIG. 9

FIG. 10

**EP 3 684 734 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2960214 A
- WO 2012119266 A
- WO 2014036732 A
- WO 2017067882 A

**Littérature non-brevet citée dans la description**

- **ANDERSSON, S.** Characterization of Bacterial Biofilms for Wastewater Treatment. School of Biotechnology, Royal Institute of Technology (KTH), 2009
- **AUBENNEAU, M. ; TAHAR, A. ; CASELLAS, C. ; WISNIEWSKI, C.** Membrane bioreactor for pharmaceutically active compounds removal: Effects of carbamazepine on mixed microbial communities implied in the treatment. *Bioprocess Engineering - SFGP2009,* 2010, vol. 45, 1826-1831
- **CHANG, S. ; WAITE, T.D. ; SCHAFER, A.I. ; FANE, A.G.** Adsorption of the endocrine-active compound estrone on microfiltration hollow fiber membranes. *Environmental science & technology,* 2003, vol. 37, 3158-3163
- **CHU, L. ; WANG, J.** Comparison of polyurethane foam and biodegradable polymer as carriers in moving bed biofilm reactor for treating wastewater with a low C/N ratio. *Chemosphere,* 2011, vol. 83, 63-68
- **CICEK, N. ; MACOMBER, J. ; DAVEL, J. ; SUIDAN, M. ; AUDIC, J. ; GENESTET, P.** Effect of solids retention time on the performance and biological characteristics of a membrane bioreactor. *Water Science & Technology,* 2001, vol. 43, 43-50
- **CLARA, M. ; STRENN, B. ; GANS, O. ; MARTINEZ, E. ; KREUZINGER, N. ; KROISS, H.** Removal of selected pharmaceuticals, fragrances and endocrine disrupting compounds in a membrane bioreactor and conventional wastewater treatment plants. *Water Research,* 2005, vol. 39, 4797-4807
- **FALÅS, P. ; BAILLON-DHUMEZ, A. ; ANDERSEN, H.R. ; LEDIN, A. ; LA COUR JANSEN, J.** Suspended biofilm carrier and activated sludge removal of acidic pharmaceuticals. *Water Research,* 2012, vol. 46, 1167-1175
- **FALÅS, P. ; LONGRÉE, P. ; LA COUR JANSEN, J. ; SIEGRIST, H. ; HOLLENDER, J. ; JOSS, A.** Micropollutant removal by attached and suspended growth in a hybrid biofilm-activated sludge process. *Water Research,* 2013, vol. 47, 4498-4506
- **JIANG QI et al.** Effect of hydraulic retention time on the performance of a hybrid moving bed biofilm reactor-membrane bioreactor system for micropollutants removal from municipal wastewater. *BIORESOURCE TECHNOLOGY,* vol. 247, 1228-1232
- **JOSS, A. ; ZABCZYNSKI, S. ; GÖBEL, A. ; HOFFMANN, B. ; LÖFFLER, D. ; MCARDELL, C.S. ; TERNES, T.A. ; THOMSEN, A. ; SIEGRIST, H.** Biological degradation of pharmaceuticals in municipal wastewater treatment: proposing a classification scheme. *Water Research,* 2006, vol. 40, 1686-1696
- **LUO, Y. ; GUO, W. ; NGO, H.H. ; NGHIEM, L.D. ; HAI, F.I. ; KANG, J. ; XIA, S. ; ZHANG, Z. ; PRICE, W.E.** Removal and fate of micropollutants in a sponge-based moving bed bioreactor. *Bioresource Technology,* 2014, vol. 159, 311-319
- **NGO, H.-H. ; GUO, W. ; XING, W.** Evaluation of a novel sponge-submerged membrane bioreactor (SSMBR) for sustainable water reclamation. *Bioresource Technology,* 2008, vol. 99, 2429-2435
- **NGUYEN, L.N. ; HAI, F.I. ; KANG, J. ; PRICE, W.E. ; NGHIEM, L.D.** Removal of trace organic contaminants by a membrane bioreactor-granular activated carbon (MBR-GAC) system. *Special issue on the Challenges in Environmental Science and Engineering,* 2012, vol. 113, 169-173
- **NGUYEN, L.N. ; HAI, F.I. ; KANG, J. ; PRICE, W.E. ; NGHIEM, L.D.** Coupling granular activated carbon adsorption with membrane bioreactor treatment for trace organic contaminant removal: Breakthrough behaviour of persistent and hydrophilic compounds. *Journal of Environmental Management,* 2013, vol. 119, 173-181
- **PAREDES L et al.** Understanding the fate of organic micropollutants in sand and granular activated carbon biofiltration systems. *SCIENCE OF THE TOTAL ENVIRONMENT,* vol. 551, 640-648

- **RADJENOVIC, J. ; PETROVIC, M. ; BARCELÓ, D.** Analysis of pharmaceuticals in wastewater and removal using a membrane bioreactor. *Analytical and Bioanalytical Chemistry,* 2007, vol. 387, 1365-1377
- **RODRÍGUEZ-HERNÁNDEZ, L. ; ESTEBAN-GARCÍA, A.L. ; TEJERO, I.** Comparison between a fixed bed hybrid membrane bioreactor and a conventional membrane bioreactor for municipal wastewater treatment: A pilot-scale study. *Bioresource Technology,* 2014, vol. 152, 212-219
- **ROH, H. ; SUBRAMANYA, N. ; ZHAO, F. ; YU, C.-P. ; SANDT, J. ; CHU, K.-H.** Biodegradation potential of wastewater micropollutants by ammonia-oxidizing bacteria. *Chemosphere,* 2009, vol. 77, 1084-1089

- **WEISS, S. ; REEMTSMA, T.** Membrane bioreactors for municipal wastewater treatment-A viable option to reduce the amount of polar pollutants discharged into surface waters?. *Water research,* 2008, vol. 42, 3837-3847
- **DE WEVER, H. ; WEISS, S. ; REEMTSMA, T. ; VEREECKEN, J. ; MÜLLER, J. ; KNEPPER, T. ; RÖRDEN, O. ; GONZALEZ, S. ; BARCELO, D. ; DOLORES HERNANDO, M.** Comparison of sulfonated and other micropollutants removal in membrane bioreactor and conventional wastewater treatment. *Water research,* 2007, vol. 41, 935-945
- **ZUPANC, M. ; KOSJEK, T. ; PETKOVŠEK, M. ; DULAR, M. ; KOMPARE, B. ; SIROK, B. ; BLAŻEKA, Z. ; HEATH, E.** Removal of pharmaceuticals from wastewater by biological processes, hydrodynamic cavitation and UV treatment. *Ultrasonics Sonochemistry,* 2013, vol. 20, 1104-1112